# EUROPEAN PATENT SPECIFICATION

(11) **EP 3 073 976 B1**
(45) Date of publication and mention of the grant of the patent: **14.06.2023**
(21) Application number: 13898319.2
(22) Date of filing: 29.11.2013
(51) Int. Cl.: A61H 3/00

(54) **MOBILITY AID**
MOBILITÄTSHILFE
AIDE À LA MOBILITÉ

(43) Date of publication of application: 05.10.2016
(73) Proprietor: Rex Bionics Limited, Auckland 0632 (NZ)
(72) Inventor: LITTLE, Richard, 0630 Auckland (NZ)
(74) Representative: Haseltine Lake Kempner LLP
(86) International application number: PCT/NZ2013/000217
(87) International publication number: WO 2015/080596

(56) References cited:
- EP-A1- 2 644 168
- WO-A1-2007/088044
- WO-A1-2010/105773
- WO-A2-2008/005330
- GB-A- 2 344 769
- US-A- 3 358 678
- US-A- 4 697 808
- US-A- 5 138 774
- US-A- 5 177 883
- US-A- 5 242 378
- US-A- 5 662 693
- US-A1- 2003 093 021
- US-A1- 2006 206 043
- US-A1- 2006 276 728
- US-A1- 2010 076 360
- US-A1- 2010 204 627
- US-A1- 2011 004 322
- US-A1- 2011 245 738
- US-A1- 2012 016 277
- US-A1- 2012 172 770
- US-A1- 2012 283 613
- US-A1- 2013 253 385
- US-A1- 2013 289 452
- US-B1- 6 821 233
- GUIZZO, E. ET AL.: 'Rise of the body bots' IEEE SPECTRUM October 2005, pages 50 - 56, XP055292395

## Description

### FIELD OF THE INVENTION

The present invention relates to a mobility aid or a walking aid suitable for supporting a disabled user, and in particular to a robotic exoskeleton to assist and support a user for walking.

### BACKGROUND OF THE INVENTION

Mobility aids in the form of robotic exoskeletons are known for fully or partially supporting and assisting a disabled user. An example of an assistive exoskeleton is shown in the applicant's PCT patent application PCT/NZ2008/000351 which is hereby incorporated by reference. An example of a control system for an assistive exoskeleton is shown in the applicant's PCT patent application PCT/NZ2009/000130.

In the growing field of robotic aid for the physically impaired, there is an ongoing need to improve the functionality of assistive medical devices. There is also a need to improve the versatility of the device to help alleviate the need for a fully customised set up. This is an especially important consideration within the area of rehabilitation where a single device may be shared amongst multiple users.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

Document US2012172770 discloses a control system for controlling an exoskeleton worn by a user and having one or more actuators associated with various body members of the exoskeleton each corresponding to a body part of the user. Patent document US2010204627 discloses a robotic exoskeleton having two length adjustable leg supports comprising shank links and thigh links. A back frame is connected to proximal ends of the leg supports. Two foot links are connected to distal ends of the leg supports. A set of mechanical actuators is provided to apply torque to the leg supports. Each foot link is rotatably jointed to the shank link of each leg support by a spring joint and moves in abduction and adduction. The enhancer is operated in both unpowered and powered states. The back frame includes a force/ torque sensor providing input to a control system.

It is therefore an object of the present invention to provide an improved mobility aid, or to at least provide the public with a useful choice.

### SUMMARY OF THE INVENTION

In a first aspect the invention may broadly be said to consist of an exoskeleton including a length adjustable leg member pivotally connected to a first other member at a first pivot location, with a linear actuator connected between the leg member and the first other member, such that extension or retraction of the actuator causes relative pivoting of the leg member relative to the first other member, wherein the actuator connects to the leg member at an actuator connecting location spaced along the leg member from the first pivot location, and the adjustment of the length of the leg member does not affect the length of the portion of the leg member that is between the actuator connecting location and the first pivot location. The invention is limited to the subject-matter as defined in the claims. Other described aspects do not form part of the invention and are only for illustrative purposes.

Preferably the leg member is pivotally connected to a second other member at a second location, and a second linear actuator connects between a second actuator connecting location on the leg member and the second other member, and the adjustment of the length of the leg member does not affect the length of the portion of the leg member that is between the second actuator connecting location and the second pivot location.

Preferably the leg member includes a first leg part and a second leg part, the first leg part including the first pivot location and the actuator connecting location, and the second leg part including the second pivot location and the second actuator connecting location, the first and second leg parts being fixable in more than one relative position to vary the separation between the first and second pivot locations.

Preferably the exoskeleton includes two leg structures, and each leg structure including a leg member of adjustable length.

In a second aspect the invention may broadly be said to consist of an exoskeleton comprising a leg structure comprising at least one leg member of adjustable length, each leg member being pivotally connected at one end to a first other member of the exoskeleton and pivotally connected at another end to a second other member of the exoskeleton, and for each leg member a linear actuator connects from the first other member to a first actuator connection location of the leg member, and a linear actuator connects from a second actuator connection location of the leg member to the second other member, and wherein adjustment of the length of the leg member is confined to a region of the leg member between the first and second actuation connection locations.

Preferably the leg structure comprises an upper leg member of adjustable length and a lower leg member of adjustable length, and wherein the upper leg member is pivotally connected at one end to a pelvis support and at the other end to the lower leg member, and wherein the lower leg member is pivotally connected at one end to the upper leg member and at the other end to a foot member.

Preferably the exoskeleton further comprises a second leg structure having an upper leg member of adjustable length and a lower leg member of adjustable length.

In a third aspect the invention may broadly be said to consist of an exoskeleton including a limb member which is adjustable in length, the limb member including a first leg part with a first pivot connection location and a second leg part with a second pivot connection location, together formed so that they may slide relative to one another along a line of adjustment, and including an adjustment mechanism which fixedly adjusts the relative position along the line of adjustment, and a locking mechanism which is independent of the adjustment mechanism and which further secures the relative position of the first leg part and the second leg part.

Preferably the line of adjustment is a straight line.

Preferably the adjustment mechanism comprises a shaft connected at one end with one of the first or second leg parts and at another end with a socket of the other first or second leg part, and a mechanism manipulates the shaft, the socket or both to adjust the relative axial position of the shaft within the socket.

Preferably the mechanism does not respond to forces between the socket and the shaft.

Preferably the mechanism is a worm drive with a rotatable input for rotating a worm and a worm wheel connected to rotate the shaft, the worm engaging the worm wheel.

Preferably the first leg part and the second leg part include engaging rail members, bending forces in use being transmitted between the engaged rail members, and the locking mechanism is manipulable between a first condition in which it presses the rail members together and a second condition in which the rail members are more free to slide.

Preferably the locking mechanism is carried by the first leg part and includes a bearing surface facing the second leg part, and a lever operable between a first position and a second position, the first position corresponding with an slidable condition, and the second position corresponding with a locked condition, manipulation of the lever from the first position to the second position urging the bearing surface against the second leg part.

Preferably the locking mechanism extends from a locking region on the first leg part, and the bearing surface faces the locking region of the first leg part, with a portion of the second leg part located between the bearing surface and the locking region of the first leg part.

Preferably the lever includes an over centre mechanism, such that in the movement of closing the lever from the unlocked to the locked position, the required force initially increases, and then reduces.

In a fourth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint, and
   a foot member for engaging with the foot of a user, the foot member being pivotally engaged to a second end of the lower leg structural member by an ankle joint,
   a main hip actuator coupled at one end to a connection point on the pelvic support and at another end to a first connection point on the upper leg structural member for actuating rotation of said upper leg structural member relative to the pelvic support member about the hip joint,
   a knee actuator coupled at one end to a second connection point on the upper leg structural member and at another end to a first connection point on the lower leg structural member for actuating rotation of said lower leg structural member relative to the upper leg structural member about the knee joint,
   a main foot actuator coupled at one end to a second connection point on the lower leg structural member and at another end to a connection point the foot member for actuating rotation of the foot member relative to the lower leg structural member about the foot joint,
   an adjustment mechanism associated with the upper leg structural member configured to adjust the length of the upper leg structural member without altering a distance between the connection point on the pelvic support and the first connection point on the upper leg structural member associated with hip actuator, and without altering a distance between the second connection point on the upper leg structural member and the first connection point on the lower leg structural member associated with the knee actuator, and
   an adjustment mechanism associated with the lower leg structural member configured to adjust the length of the lower leg structural member without altering a distance between the second connection point on the lower leg structural member and the connection point on the foot member associated with foot actuator.

In a fifth aspect the invention may broadly be said to consist of a structural foot member for an exoskeleton of a walking aid suitable for supporting a mobility impaired disabled user comprising a foot support region for retaining a user's foot therein, the foot support region being adjustable in position relative to an ankle joint of the exoskeleton to enable alignment of the user's ankle with the ankle joint along at least one axis.

Preferably the foot support region is fixedly adjustable in position relative to the ankle joint to align the ankle of the user with at least on pivot axis of the ankle joint of the exoskeleton.

Preferably the foot support region is fixedly adjustable in position relative to the ankle joint to align the ankle of the user with a first substantially transverse pivot axis of the ankle joint, or a second substantially longitudinal pivot axis of the ankle joint, or both.

Preferably the foot support region is fixedly adjustable in position relative to the ankle joint along two substantially orthogonal axes.

Preferably the foot support region is adjustable relative to the ankle joint along a longitudinal axis of the foot member.

Preferably the foot support region is adjustable relative to the ankle joint along a substantially vertical axis.

Preferably the foot support region is bounded by at least one lateral wall member, the wall member being adjustable along at least one axis to adjust the position of the support region relative to the ankle joint.

Preferably the foot member further comprises a base from which the lateral wall member extends.

Preferably the wall member is a heel support located at an end of the base for engaging a user's heel in use.

Preferably the heel support is adjustable in position along a longitudinal axis of the base.

Preferably the heel support is moveably engaged with the base of the foot member.

Preferably the heel support is slidably engaged with the base of the foot member.

Preferably the foot member further comprises a fastener operable between a first state where the heel support is free to slide against the base to adjust the longitudinal position of the heel support relative to the ankle joint and a second state where the heel support is locked in position relative to the ankle joint.

Preferably the foot support region is further bounded by a support surface for receiving the user's foot thereon, the support surface being adjustable in position relative to the ankle joint along at least one axis.

Preferably the support surface is adjustable in position along a substantially vertical axis.

Preferably the foot member further comprises one or more stackable plate members configured to engage a base of the foot member for adjusting a position of the support surface relative to the ankle joint along the vertical axis, in use the uppermost plate of the stack providing the support surface for the foot.

Preferably a number of plates or a thickness of each plate or both is selectable by the user to adjust the relative position of the support surface and the ankle joint in the vertical axis.

Preferably the foot member further comprises a pair of walls extending laterally from either side of the base, each wall having an inner periphery corresponding to an outer periphery of the one or more plate members for retaining the plate members there between.

Preferably the foot member further comprises a connector for coupling an ankle joint of the exoskeleton thereto.

In a sixth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint to enable rotation of the lower leg structural member relative to the upper leg structural member in the flexion and extension directions,
   a foot member for engagement with the foot of the user, the foot member being pivotally engaged to a second end of the lower leg structural member by an ankle joint, and wherein the foot member comprises an adjustment mechanism for adjusting a position of the user's foot relative to the ankle joint along at least on axis.

In a seventh aspect the invention may broadly be said to consist of a walking aid suitable for supporting a mobility impaired disabled user comprising:
an exoskeleton comprising:
a first leg structure and a second leg structure,
a first foot member and a second foot member, each of the first foot member and second foot member being pivotally engaged to an end of the respective leg structure by an ankle joint, and wherein the foot member comprises an adjustment mechanism for adjusting a position of the user's foot relative to the ankle joint along at least on axis.

In an eighth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint to enable rotation of the lower leg structural member relative to the upper leg structural member in the flexion and extension directions, and
   a mechanical knee stop positioned relative to the leg structure and configured to limit the extent of rotation of the lower leg structural member relative to the upper leg structural member in the direction of extension to prevent hyperextension of the lower leg structural member.

Preferably the knee stop is located adjacent the knee joint.

Preferably the knee stop comprises at least one rigid abutment protruding from a surface of the upper leg structural member in an anterior direction.

Preferably the lower leg structural member comprises an extended end adjacent the knee joint configured to engage the at least one rigid abutment upon rotation about the knee joint in the extension direction to a position where a longitudinal axis of the lower leg structural member is substantially parallel to a longitudinal axis of the upper leg structural member to limit the lower leg structural member from further rotation in the extension direction and to prevent hyperextension of the user's knee.

Preferably the knee stop comprises a pair of adjacent rigid abutment surfaces protruding from a surface of the upper leg structural member in the anterior direction and the extended end of the lower leg structural member comprises a clevis having a pair of rigid arm, each configured to engage a corresponding abutment upon rotation of the lower leg structural member about the knee joint in the extension direction to the position where a longitudinal axis of the lower leg structural member is substantially parallel to a longitudinal axis of the upper leg structural member.

Preferably the abutment is or abutments are integral with the upper leg structural member.

In one embodiment each leg structure of the exoskeleton further comprises, a knee actuator coupled at one end to the upper leg structural member and to the lower leg structural member at an opposing end to cause rotation of the lower leg structural member about the knee joint during extension and retraction of the actuator, and wherein the knee stop is a rigid abutment located in a path of the actuator arm to limit extension or retraction of the actuator beyond a point resulting in hyperextension of the user's knee.

In a ninth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint to enable rotation of the lower leg structural member relative to the upper leg structural member in the flexion and extension directions, and
   a mechanical knee stop positioned relative to the leg structure to prevent rotation of the lower leg structural member relative to the upper leg structural member in the direction of extension beyond a rotational position where an orientation of the lower leg structural member is substantially parallel to an orientation of the upper leg structural member.

In a tenth aspect the invention may broadly be said to consist of an exoskeleton comprising a leg structure having a first leg member pivotally coupled to a second leg member via a knee joint, and a mechanical knee stop positioned relative to the leg structure to prevent rotation of the second leg member relative to the first leg member in the direction of extension beyond a rotational position where an orientation of the second leg member is substantially parallel to an orientation of the first leg member.

In an eleventh aspect the invention may broadly be said to consist of an exoskeleton comprising a leg structure having a first leg member pivotally coupled to a second leg member via a knee joint, and a mechanical knee stop positioned relative to the leg structure and configured to limit the extent of rotation of the second leg member relative to the first leg member in the direction of extension to prevent hyperextension of the lower leg structural member.

In a twelfth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint to enable rotation of the lower leg structural member relative to the upper leg structural member in the flexion and extension directions, and
   an upper leg outer cover configured to substantially enclose the upper leg structural member and having a pair of telescoping upper cover parts for adjusting a size of the upper leg outer cover in accordance with a size of the upper leg structural member, and
   a lower leg outer cover configured to substantially enclose the lower leg structural member and having a pair of telescoping lower cover parts for adjusting a size of the lower leg outer cover in accordance with a size of the lower leg structural member, wherein the lower leg outer cover is configured to pivotally couple the upper leg outer cover adjacent the knee joint.

Preferably the upper leg structural member comprises a pair of leg parts adjustable in relative axial positions to adjust a length of the upper leg structural member, and wherein the pair of telescoping outer cover parts of the upper leg outer cover are coupled to the pair of leg parts such that adjustment of the length of the upper leg structural member causes a corresponding adjustment in the upper leg outer cover via the telescoping upper cover parts.

Preferably the lower leg structural member comprises a pair of leg parts adjustable in relative axial positions to adjust a length of the lower leg structural member, and wherein the pair of telescoping outer cover parts of the lower leg outer cover are coupled to the pair of leg parts such that adjustment of the length of the lower leg structural member causes a corresponding adjustment in the lower leg outer cover via the telescoping lower cover parts.

Preferably the upper leg outer cover comprises a recess configured to locate adjacent an adjustment mechanism of the pair of leg parts to enable access by a user to the adjustment mechanism to adjust the relative axial positions of the leg parts.

Preferably the lower leg outer cover comprises a recess configured to locate adjacent an adjustment mechanism of the pair of leg parts to enable access by a user to the adjustment mechanism to adjust the relative axial positions of the leg parts.

Preferably one of the pair of outer cover parts of the upper leg outer cover comprises a flanged section configured to be telescopingly received within a corresponding end of the other part of the pair of outer cover parts.

Preferably the flanged section comprises indicia arranged longitudinally along the section indicative of one or more sizes of the corresponding upper leg structural member, the indicia being partially or fully exposed in accordance with the extent to which the flanged section is received within the other part of the pair of cover parts.

Preferably one of the pair of outer cover parts of the lower leg outer cover comprises a flanged section configured to be telescopingly received within a corresponding end of the other part of the pair of outer cover parts.

Preferably the flanged section comprises indicia arranged longitudinally along the section indicative of one or more sizes of the corresponding lower leg structural member, the indicia being partially or fully exposed in accordance with the extent to which the flanged section is received within the other part of the pair of cover parts.

In a thirteenth aspect the invention may broadly be said to consist of a walking aid suitable for supporting a mobility impaired disabled user comprising:
an exoskeleton comprising:
a rigid pelvic support member for supporting the user's hip region,
a first leg structure and a second leg structure, each of the first leg structure and the second leg structure coupled to and extending from said pelvic support for supporting a respective leg of the user, and each of the first leg structure and the second leg structure comprising:
   an upper leg structural member for engaging with the upper leg of the user, the upper leg structure member being pivotally engaged at a first end thereof to the pelvic support member by a hip joint,
   a lower leg structural member for engaging with the lower leg of the user, the lower leg structural member being pivotally engaged at a first end thereof to a second end of the upper leg structural member by a knee joint to enable rotation of the lower leg structural member relative to the upper leg structural member in the flexion and extension directions, and
   an upper leg outer cover configured to substantially enclose the upper leg structural member and adjustable in size in situ to match a size of the upper leg structural member, and
   a lower leg outer cover configured to substantially enclose the lower leg structural member and adjustable in size in situ to match a size of the lower leg structural member.

In a fourteenth aspect the invention may broadly be said to consist of an exoskeleton comprising a leg member having an outer cover, the leg member and outer cover comprising two telescoping parts to adjust the size of the outer cover to match a size of the leg member.

In a fifteenth aspect the invention may broadly be said to consist of a method for controlling an exoskeleton worn by a user and having one or more actuators associated with various body members of the exoskeleton each corresponding to a body part of the user, the method comprising the steps of:
receiving input data indicative of a desired movement sequence;
selecting from memory pre-programmed movement data indicative of one or more sequential instructions required to effect the movement sequence, each instruction being associated with relative actuator movements for performing the instruction, wherein the selection of pre-programmed movement data is based on calibration information relating to a user's anatomical structure or a user's gait preference or both; and
moving the one or more actuators according to the updated relative actuator movements for each instruction.

Preferably the step of prior to receiving input data indicative of a desired movement sequence:
receiving calibration data indicative of a user's anatomical structure or a user's gait preference or both,

Preferably the step of receiving calibration data comprises selecting from a set of prestored anatomical structures or gait preferences or a combination of both.

Preferably data indicative of the user's anatomical structure includes data indicative of a user's size.

Preferably the data indicative of a size of the user includes data indicative of a user's leg length, data indicative of the weight of the user or both.

Preferably the data indicative of user's gait preference includes data indicative of a preferred degree of hip tilt.

In a sixteenth aspect the invention may broadly be said to consist of a method for controlling an exoskeleton worn by a user and having one or more actuators associated with various body members of the exoskeleton each corresponding to a body part of the user, the actuators being driven by a movement map to achieve an associated movement sequence, the method comprising the steps of:
for each of one or more movement sequences, determining a set of movement maps required to achieve a balanced system to the user, each movement map relating to a different anatomical structure or gait preference or both, and
storing in memory the set of movement maps against each movement sequence, wherein each movement map includes data indicative of relative actuator movements, the relative actuator movements being associated with performing one or more sequential instructions required to effect the movement sequence.

In a seventeenth aspect the invention may broadly be said to consist of a control system for controlling an exoskeleton worn by a user and having one or more actuators associated with various body members of the exoskeleton each corresponding to a body part of the user, the control system comprising:
a calibration sub-system for receiving calibration input data indicative of the user's anatomical structure or a user's gait preference or both.
a user interface for receiving input data indicative of a desired movement sequence,
a memory component for storing pre-programmed movement maps comprising movement data indicative of one or more sequential instructions required to effect the movement sequence, each instruction being associated with relative actuator movements for performing the instruction, and wherein one or more movement sequences comprises a set of movement maps, each movement map in the set relating to a particular anatomical structure or gait preference or both, and
an actuator controller for moving the one or more actuators according to the relative actuator movements for each instruction,

In a eighteenth aspect the invention may broadly be said to consist of a method for controlling an exoskeleton worn by a user and having one or more actuators associated with various body members of the exoskeleton each corresponding to a body part of the user, the method comprising the steps of:
receiving input data indicative of a desired movement sequence wirelessly from a remote device;
obtaining from memory pre-programmed movement data indicative of one or more sequential instructions required to effect the movement sequence, each instruction being associated with relative actuator movements for performing the instruction;
moving the one or more actuators according to the relative actuator movements for each instruction.

In a nineteenth aspect the invention may broadly be said to consist of a control system for controlling an exoskeleton worn by a user and having one or more actuators associated with various body members of the exoskeleton each corresponding to a body part of the user, the control system comprising:
a wireless receiver configured to communicate with and receive input data indicative of a desired movement sequence from a remote device having an associated transmitter,
a memory component for storing pre-programmed movement data indicative of one or more sequential instructions required to effect the movement sequence, each instruction being associated with relative actuator movements for performing the instruction, and
an actuator controller for moving the one or more actuators according to the relative actuator movements for each instruction.

In a twentieth aspect the invention may broadly be said to consist of an exoskeleton comprising:
a leg structure having a length adjustable leg member pivotally connected to a first other member at a first pivot location, with a linear actuator connected between the leg member and the first other member, such that extension or retraction of the actuator causes relative pivoting of the leg member relative to the first other member, wherein the actuator connects to the leg member at an actuator connecting location spaced along the leg member from the first pivot location, and the adjustment of the length of the leg member does not affect the length of the portion of the leg member that is between the actuator connecting location and the first pivot location, and
a structural foot member pivotally coupled to the leg structure at an ankle joint, the foot member having a foot support region for retaining a user's foot therein, the foot support region being adjustable in position relative to the ankle joint to enable alignment of the user's ankle with the ankle joint along at least one axis.

In a twenty first aspect the invention may broadly be said to consist of an exoskeleton including a leg structure having a leg member which is adjustable in length, the leg member including a first leg part with a first pivot connection location and a second leg part with a second pivot connection location, together formed so that they may slide relative to one another along a line of adjustment, and including an adjustment mechanism which fixedly adjusts the relative position along the line of adjustment, and a locking mechanism which is independent of the adjustment mechanism and which further secures the relative position of the first leg part and the second leg part, and
a structural foot member pivotally coupled to the leg structure at an ankle joint, the foot member having a foot support region for retaining a user's foot therein, the foot support region being adjustable in position relative to the ankle joint to enable alignment of the user's ankle with the ankle joint along at least one axis.

In a twenty second aspect the invention may broadly be said to consist of an exoskeleton comprising:
a leg structure having a length adjustable leg member pivotally connected to a first other member at a first pivot location, with a linear actuator connected between the leg member and the first other member, such that extension or retraction of the actuator causes relative pivoting of the leg member relative to the first other member, wherein the actuator connects to the leg member at an actuator connecting location spaced along the leg member from the first pivot location, and the adjustment of the length of the leg member does not affect the length of the portion of the leg member that is between the actuator connecting location and the first pivot location, and
an outer cover adapted to substantially enclose the leg member and comprising two telescoping parts to adjust the size of the outer cover to match a size of the leg member.

In a twenty third aspect the invention may broadly be said to consist of an exoskeleton including a leg structure having a leg member which is adjustable in length, the leg member including a first leg part with a first pivot connection location and a second leg part with a second pivot connection location, together formed so that they may slide relative to one another along a line of adjustment, and including an adjustment mechanism which fixedly adjusts the relative position along the line of adjustment, and a locking mechanism which is independent of the adjustment mechanism and which further secures the relative position of the first leg part and the second leg part, and
an outer cover adapted to substantially enclose the leg member and comprising two telescoping parts to adjust the size of the outer cover to match a size of the leg member.

In a twenty fourth aspect the invention may broadly be said to consist of an exoskeleton comprising:
a leg structure having a length adjustable leg member pivotally connected to a first other member at a first pivot location, with a linear actuator connected between the leg member and the first other member, such that extension or retraction of the actuator causes relative pivoting of the leg member relative to the first other member, the leg member being adjustable in length to complement a leg or limb length of the user, and
a control system for controlling the exoskeleton and comprising:
   a calibration sub-system for receiving calibration input data indicative of the user's anatomical structure,
   a user interface for receiving input data indicative of a desired movement sequence,
   a memory component for storing pre-programmed movement maps comprising movement data indicative of one or more sequential instructions required to effect the movement sequence, each instruction being associated with relative actuator movements for performing the instruction, and wherein one or more movement sequences comprises a set of movement maps, each movement map in the set relating to a particular anatomical structure, and
   an actuator controller for moving the linear actuator according to the relative actuator movements for each instruction.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

The term "comprising" as used in this specification and claims means "consisting at least in part of". When interpreting each statement in this specification and claims that includes the term "comprising", features other than that or those prefaced by the term may also be present. Related terms such as "comprise" and "comprises" are to be interpreted in the same manner.

As used herein the term "and/or" means "and" or "or", or both.

As used herein "(s)" following a noun means the plural and/or singular forms of the noun.

The invention consists in the foregoing and also envisages constructions of which the following gives examples only.

### BRIEF DESCRIPTION OF THE DRAWINGS

Preferred embodiments of the invention will be described by way of example only and with reference to the drawings, in which:
Figure 1 is a side-view schematic of a preferred form walking aid of the invention;
Figure 2 is a front-view schematic of the walking aid of figure 1 with a user engaged in the device;
Figures 3a and 3b are close up views of a hip joint of the exoskeleton of the preferred form walking aid from front and side views respectively;
Figure 4 is a perspective partially exploded view of a leg structure of the exoskeleton of the preferred form walking aid;
Figures 5 and 6 are close up views of an ankle joint of the exoskeleton of the preferred form walking aid from side and back views respectively;
Figure 7 is a side perspective view of a preferred form exoskeleton of the invention;
Figure 8 is a back perspective view of the preferred form exoskeleton of figure 7 with a back cover removed from the pelvic support to show the internal control system electronics;
Figure 9 is a back perspective view of the preferred form exoskeleton of figure 7;
Figure 10 is a close up perspective view of the hip joints of the preferred form exoskeleton of figure 7;
Figure 11 is a close up perspective view of the leg structures and knee joints of the preferred form exoskeleton of figure 7;
Figure 12 is a close up perspective view of an adjustable leg structure of the preferred form exoskeleton of figure 7;
Figure 13 is a close up perspective view of an upper leg part of an adjustable upper leg member of the leg structure;
Figure 14 is a close up perspective view of a lower leg part of the adjustable upper leg member of the leg structure;
Figure 15 is a perspective view of a preferred form adjustable length leg structure of the invention with both upper and lower leg members in a fully shortened state;
Figure 16 is a close up perspective view of the locking mechanism associated with the adjustable leg members in a released state;
Figure 17 is a close up perspective view of the locking mechanism associated with the adjustable leg members in a released state and the leg parts being moved relative to one another to increase the leg member length;
Figure 18 is a close up perspective view of the locking mechanism associated with the adjustable leg members in a locked state after lengthening the leg member;
Figure 19 is a close up perspective view of the locking mechanism associated with the adjustable leg members in a locked state;
Figure 20 is a close up perspective view of the locking mechanism associated with the adjustable leg members in a released state;
Figure 21 is a close up perspective view of the adjustment mechanism associated with the adjustable leg members;
Figure 22 is a close up perspective view of knee joint having an adjacent knee stop;
Figure 23 is a perspective view of the preferred form exoskeleton with leg covers;
Figures 24 and 25 are close up perspective view of the upper leg covers from different angles;
Figure 26 is a side perspective view of a preferred form foot structure of the invention;
Figure 27 is a back perspective view of the preferred form foot structure;
Figure 28 is an exploded perspective view of the preferred form foot structure;
Figures 29a-29j show a model of the exoskeleton undergoing a static step movement sequence in accordance with a preferred form of the control system of the WA;
Figures 30a-30e show the model of the exoskeleton undergoing a left dynamic step movement sequence in accordance with a preferred form of the control system of the WA;
Figures 31a-31e show the model of the exoskeleton undergoing a right dynamic step movement sequence in accordance with a preferred form of the control system of the WA;
Figures 32a and 32b show the model of the exoskeleton undergoing a sitting movement sequence in accordance with a preferred form of the control system of the WA;
Figures 33a and 33b show the model of the exoskeleton undergoing a standing movement sequence in accordance with a preferred form of the control system of the WA; and
Figure 34 shows an overview schematic diagram of the control system in accordance with a preferred form of WA.

### DETAILED DESCRIPTION OF PREFERRED EMBODIMENTS

### 1. OVERVIEW

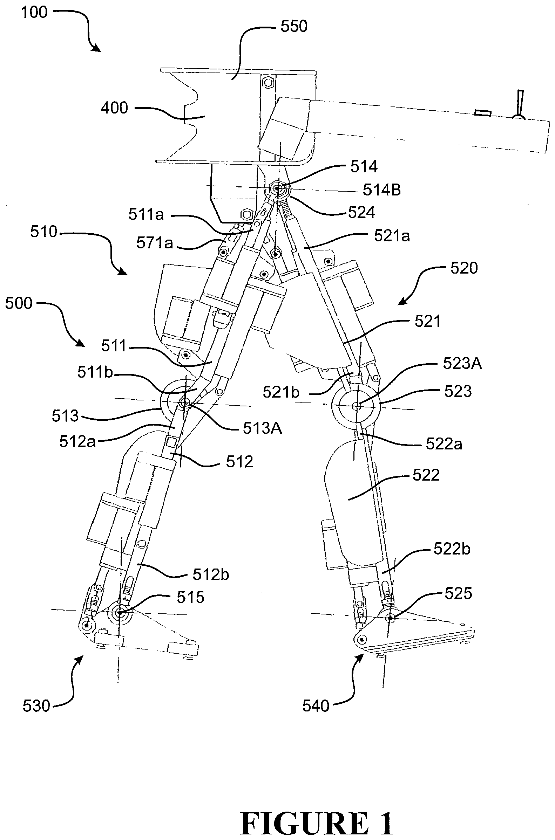

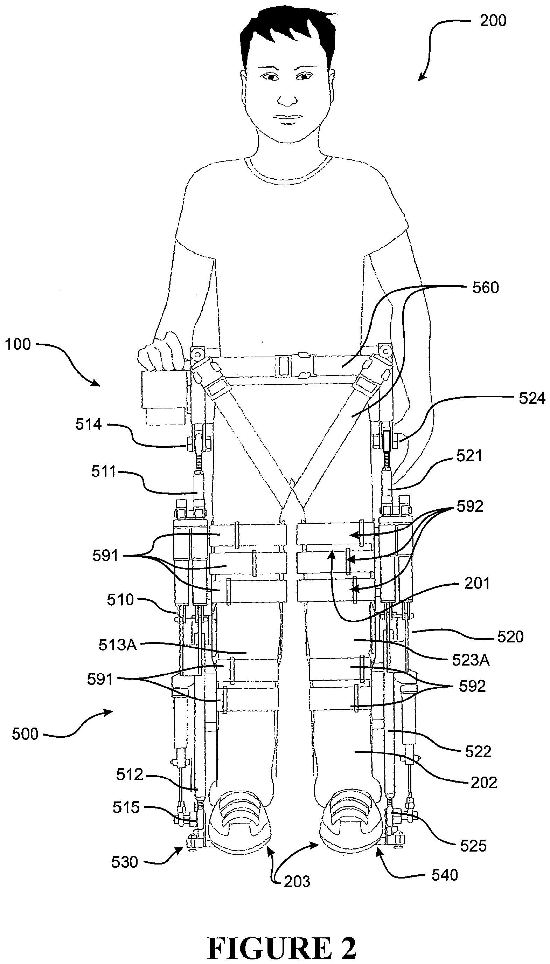

Referring to figures 1 and 2, a schematic of a preferred form mobility or walking aid (WA) 100 of the invention is shown comprising an exoskeleton 500, a control system 400 for controlling movement of the exoskeleton 500, and a power source for providing power to the exoskeleton 500 and the associated control system 400. The WA system 100 may be configured as a fully supportive system to assist a paraplegic user for example, or as a partially or fully supportive system to assist in the rehabilitation of a user 200 with limited mobility. When a mobility impaired user is secured to the WA, the user is caused to move their joints and muscles through motions of walking, thereby assisting in the prevention of deterioration of a user's physiology.

### 2. EXOSKELETON

The exoskeleton 500 is an electromechanical skeletal structure worn externally by a user and configured to support the legs and waist of the user for assisting in at least a walking motion of the user. The exoskeleton 500 comprises a pair of leg structures 510 and 520 each configured to receive and retain a respective leg of the user, a pair of foot members 530 and 540 each configured to receive and retain a respective foot of the user, and a pelvic support member or hip frame 550 adapted to receive and retain the user's pelvis and hips. Each leg structure 510/520 comprises an upper leg member 511/521 and a lower leg member 512/522. The upper and lower leg members are moveably coupled relative to one another at a knee joint 513/523 of the leg structure. Each upper leg member 511/521 is also moveably coupled to a respective side of the hip at a hip joint 514/524, while each lower leg member 512/522 is also moveably coupled to the respective foot member 530/540 at an ankle joint 515/525 of the leg structure. In this manner, a structure is provided that is capable of at least partially imitating the movement capabilities of a person's lower region.

### 2.1 Leg Structures

The exoskeleton comprises a pair of moveable leg structures 510 and 520, coupled to the hip frame 550 and foot members 530/540 and configured to assist in the movement of the user's legs. Each leg structure 510/520 comprises an upper leg member 511/521, a lower leg member 512/522 and associated actuators 570/580 for effecting movement of the upper and lower leg members relative to one another via the knee joint 513/523, relative to the hip frame 550 via the hip joint 514/524, and relative to the corresponding foot support 530/540 via the ankle joint 515/525. At least one of, but preferably both, upper 511/521 and lower 512/522 leg members are adjustable in length to customise the exoskeleton 500 to the user's anatomical/leg dimensions.

### Hip and Knee Joints

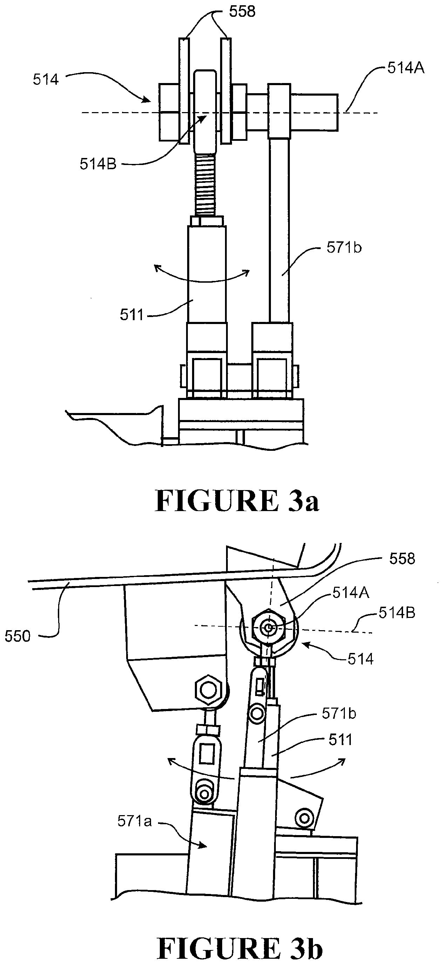

Referring also to figures 3a and 3b, in the preferred embodiment each upper leg member 511/521 is pivotally coupled to a respective side of the hip frame 550 at an upper end 511a/512a of the upper leg member 511/521 by a hip joint 514/524. Each hip joint 514/524 enables relative rotation between the upper leg member 511/521 and the hip frame 550 at least about one axis, but preferably about two substantially orthogonal axes. In particular, each hip joint 514/524 enables relative rotation about a primary axis 514A to achieve hip/leg flexion and hip/leg extension movements in the exoskeleton. The primary axis 514A thus enables movement of a user's legs relative to the hips along a sagittal plane of the user in the anterior and posterior directions. Each hip joint 514/524 further enables rotation about a secondary axis 514B to achieve leg abduction and leg adduction movements in the exoskeleton. The secondary axis 514B thus enables movement of the user's legs relative to the hips along a Coronal plane of the user in lateral and medial directions. In the preferred embodiment, the hip joints 514 and 524 enable relative rotation between the upper leg members 511 and 521 and the hip frame 550 within hip extension range of 0 to 20 degrees and a hip flexion range of 0 to 78, and a leg abduction and a leg adduction range of about 0 to 12 degrees and more preferably about 0 to 6 degrees. It will be appreciated that these ranges are configurable depending on the desired range of motion for the exoskeleton 50. In the preferred embodiment the hip joint is in the form of a rose joint. Each hip joint 514/524 is limited in its movement in the lateral and medial directions by a pair of horizontally aligned plastic, and preferably acetyl, bushes disposed either side of the rose joint.

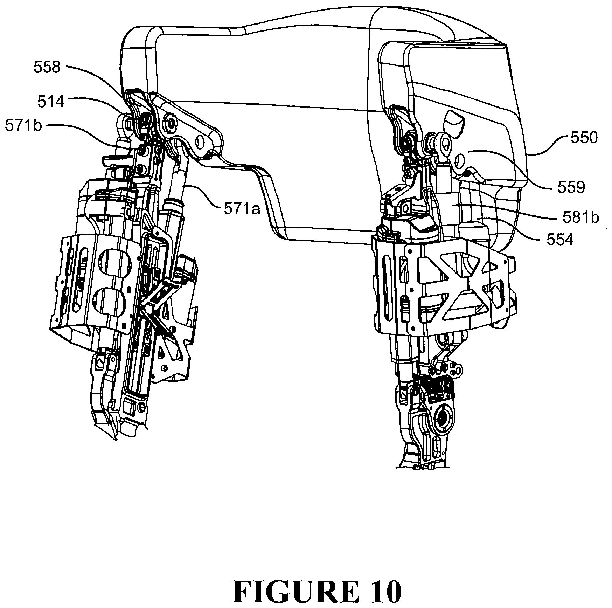

Referring in particular to figures 3, 10 and 12, a vertically aligned flange or a rigid clevis 558 of the hip joint 514/524 will limit or partially or fully prevent the upper leg structural member 511/512 from pivotal movement in a transverse plane to limit or partially or fully prevent lateral and/or medial rotation of the leg member 511/512 about its longitudinal axis. This movement is also at least partially limited by the travel length of each of the associated upper leg actuators 571a,b/581a,b.

In the preferred embodiment, each hip joint 514/524 defines a hip axis 514A/524A that in use is located relative to the user at or approximate to the natural axis of the user's hip rotation in the anterior/posterior direction of movement. In a preferred embodiment each hip joint 514/524 is configured relative to the hip frame 550 with its axis of rotation 514A/524A extending downwardly in a lateral direction at an angle of between zero and ten degrees, and more preferably of about four degrees. This inclination of the axis of rotation 514A/524A mimics a human being's upper leg alignment. The inclination means that the foot members of the WA are closer together, which allows for a more natural transfer of the centre of mass (generally located about the middle of the pelvis) to a point within the support area provided by the foot members when the WA is controlled to move through a walking motion.

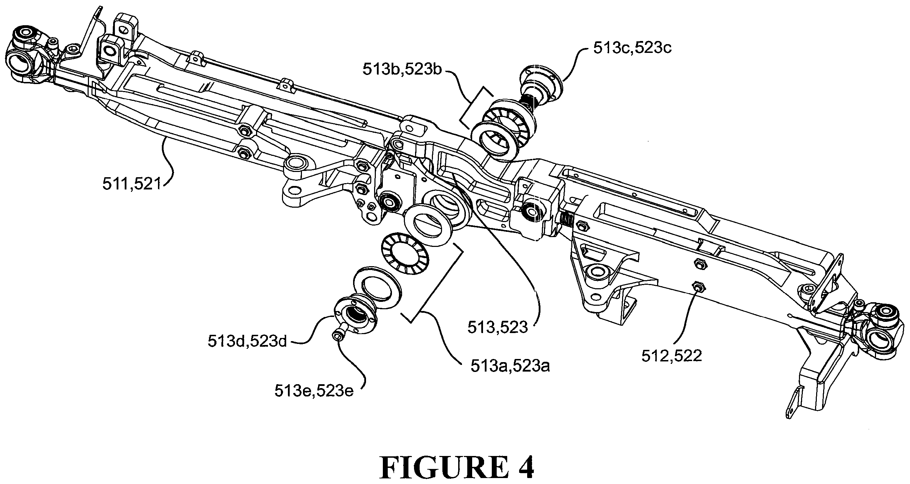

As shown in figure 4, at an opposing lower end 511b/521b of each upper leg member 511/521, a knee joint 513/523 pivotally couples the upper leg member 511/521 to an upper end 512a/522a of the respective lower leg member 512/522. Each knee joint 513/523 enables relative rotation between respective upper and lower leg members about a single axis 513A/523A to enable lower leg extension and lower leg flexion relative to the upper leg member 511/521. Each axis 513A/523A is substantially parallel to the hip joint axis 514A and the transverse and coronal planes of the user, and allows rotation in the posterior and/or anterior directions. The knee joints 513 and 523 enables lower leg flexion within a range of about 0 to 100 degrees about the axes 513A and 523A. It will be appreciated that these ranges are configurable depending on the desired range of motion for the exoskeleton 50. In the preferred embodiment the knee joint is in the form of a roller bearing arrangement. Each knee joint 513/523 may be subject to large twisting forces or sideways forces, causing axial forces on the roller bearing arrangement. For this reason, each knee joint will also include a thrust bearing arrangement configured for resisting axial forces on the knee joint 513/523. In particular two thrust bearings 513a,b/523a,b are provided on either side of the knee joint 513/523. The thrust bearings 513a,b/523a,b are secured by a knee pin 513c/523c and nut 513d/523d arrangement and a knee locking screw 513e/523e.

In the preferred embodiment, the longitudinal axis of each upper leg member 511/521 is offset from the pivot axis 513A/523A of the associated knee joint 513/523. Each axis 513A/523A is located behind (in a forward direction of travel of the user) the longitudinal axis of the associated upper leg member 511/521. The longitudinal axis of each lower leg member 512/522 projects through the pivot axis 513A/523A of the associated knee joint 513/523. The offset of the upper leg members with the knee joints replicates the form of the human skeleton, to ensure correct alignment of each of the user's knee joints with the knee joints of the exoskeleton thereby avoiding any stress to the user's knee joints and alleviating or preventing knee damage to the user.

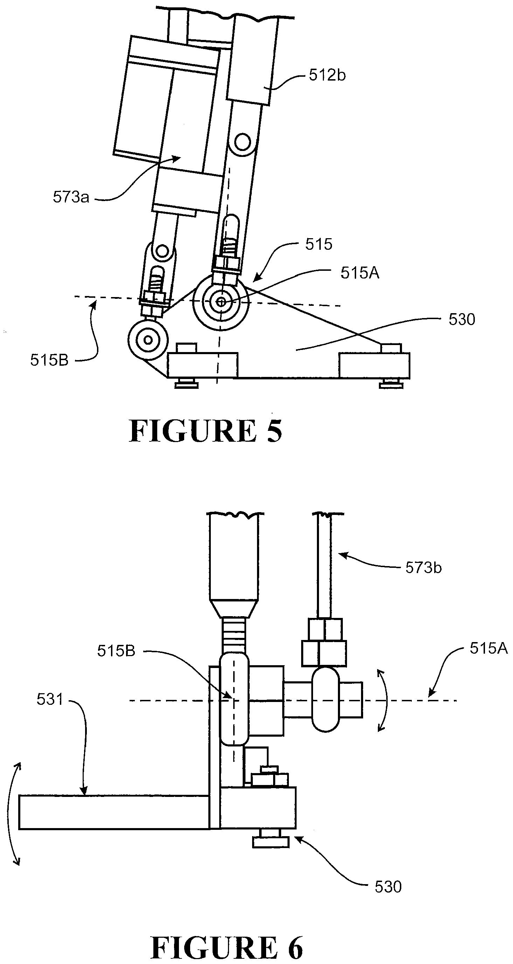

Referring now also to figures 5 and 6, a lower end 512b/522b of each lower leg member 512/522 is pivotally coupled to the respective foot member 530/540 by an ankle joint 515/525. This is described in further detail in the foot structure section of this specification. Each ankle joint 515/525 enables relative rotation between the respective lower leg and foot members about at least one, but preferably two substantially orthogonal axes. In particular, each ankle joint enables relative rotation about a primary axis 515A/525A to achieve ankle/foot dorsiflexion and ankle/foot plantar flexion movements. The primary axis 515A/525A is substantially parallel to hip and knee joint axes 514A and 513A/523A and the transverse and coronal planes of the user, and allows rotation in the superior and inferior directions. Each ankle joint is preferably further configured to enable relative rotation about a secondary axis 515B/525B substantially orthogonal to the primary axis 513A/523A to achieve ankle/foot inversion and ankle/foot eversion movements. The secondary axis 515B/525B is substantially parallel to the transverse and sagittal planes of the user, and allows rotation in the lateral and medial directions. Each ankle joint 515/525 enables relative rotation between the lower leg member 512/522 and the associated foot member 530/540 about the primary axis 515A/515B within a range of about 0-30 degrees either side of a neutral position of the foot member 530/540, and about the secondary axis 515B/525B within a range of about 0-10 degrees, and more preferably within a range of about 0-6 degrees either side of a neutral position of the foot member 530/540. In the preferred embodiment the ankle joint is in the form of a rose joint. Each ankle joint 515/525 is limited in its movement in the lateral and medial directions by a pair of horizontally aligned plastic, and preferably acetyl, bushes disposed either side of the rose joint.

In the preferred embodiment, each ankle joint 515/525 is configured with its primary axis of rotation 515A/525A extending downwardly in a lateral direction at an angle of between zero and 6 degrees, and more preferably at about four degrees.

It will be appreciated that in alternative embodiments, the hip 514/524, knee 513/523 and ankle joints 515/525 may be configured to enable relative rotation between the associated parts along any combination of Sagittal, Coronal and/or Transverse planes of the user depending on the desired/required level of complexity of the WA 100 and/or the desired/required level of similarity with the associated human joint. For example, in alternative embodiments, the knee joints 515 and 525 may also enable relative rotation abduction and adduction of the lower leg, and/or the hip joints 514 and 524 may also enable relative rotation to achieve transverse abduction/adduction and/or lateral/medial rotations for example. The degree of movement or rotation along any one or more of these planes may be limited in one or more directions in accordance with the capabilities of the associated human joint.

### Leg Actuators

Referring in particular to figures 3a, 3b, 7 and 10, in the preferred embodiment each upper leg member 511/521 and corresponding side of the hip frame 550 is operatively coupled to a pair of associated upper leg actuators 571a,b/581a,b. A primary electromechanical actuator 571a/581a is operatively coupled at one end to a connection point on the upper leg member 511/521 and at an opposing end to a connection point on the hip frame 550 and is configured to rotate the upper leg member 511/521 relative to the hip frame 550 about the primary axis 514A of the hip joint 514/524 during actuation. A secondary electromechanical actuator 571b/581b is operatively coupled at one end to a connection point on the upper leg member 511/521 and at an opposing end to a connection point on the respective side of the hip frame 550 and is configured to rotate the upper leg member 511/521 relative to hip frame 550 about the secondary axis 514B of the hip joint 514/524. The connection points are each fixed in position relative to the upper leg member and the hip joint respectively. The primary and secondary actuators 571a,b/581a,b are linear actuators. Extension of each actuator arm causes the corresponding leg member 511/521 to rotate about the respective axis in one direction and retraction of the actuator causes the leg member 511/521 to rotate about the respective axis in an opposing direction. Linear movement of the actuators is translated into pivotal movement of the legs by action of the hip joints 514 and 524.

To provide a low profile exoskeleton 500, each linear actuator is arranged substantially parallel to the corresponding upper leg member. Each primary actuator 571a/581a is pivotally coupled to connection point on the respective side of the hip frame 550 behind the hip joint 514/524 (in a direction of forward motion of the exoskeleton) and is configured to pivot about two substantially orthogonal axes, for example to move within the sagittal plane in the anterior and posterior direction and within the transverse plane in the lateral and medial directions. Each secondary actuator 571b/581b is pivotally coupled to the respective connection point on side of hip joint 514/524 and is configured to pivot/rotate about a third axis substantially orthogonal to the two axes of the primary actuator, for example to move within the coronal plane in the superior and inferior directions.

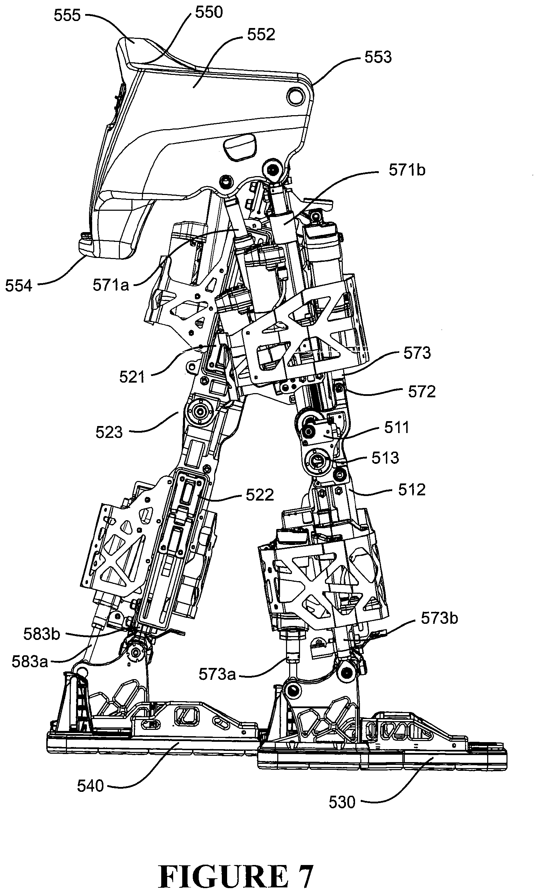

Referring in particular to figure 7, in the preferred embodiment the upper 511/521 and lower 512/522 leg members and the knee joints 513/523 have associated there with knee actuators 572 and 582. Each leg structure 510/520 comprises a knee actuator 581/582 operatively coupled to the upper 511/521 and lower 512/522 leg members of the leg structure 510/520. Movement of the knee actuator 572/582 causes the corresponding lower leg member 512/522 to pivot relative to the upper leg member 511/521 about the associated knee joint 513/523. Each electromechanical knee actuator 572/582 is operatively coupled at one end to the a connection point on the upper leg member 511/521 and at an opposing end to a connection point on the lower leg member 512/522 and is configured to move the lower leg member 512/522 about the axis 513A/523A of the knee joint 513/523. The connection points are each fixed in position relative to the upper leg member and the knee joint respectively. Each knee actuator 572/582 is a linear actuator. Extension of the actuator 572/582 causes the corresponding lower leg member 512/522 to move about the axis 513A/523A in one direction, and retraction of the actuator causes the leg member to move about the axis 513A/523A in an opposite direction. Linear movement of the actuators 572 and 582 is translated into pivotal movement of the lower leg members 512 and 522 by action of the knee joints 513 and 523 respectively.

To provide a low profile exoskeleton 500, each linear knee actuator 572/582 is preferably arranged substantially in parallel with the associated upper and lower leg members 511,512/521,522. Each actuator 572/582 is pivotally coupled to the upper end 512a/522a of the respective lower leg member 512/522 to rotate about an axis substantially parallel to the axis of the knee joint 514/524.

The linear actuators used are preferably low voltage Direct Current (DC) actuators with position feedback through a sensor in the actuator. Typically, each actuator would be caused to move by an electric motor (not shown) driving a worm gear (not shown), which causes the actuator arm to extend or retract.

It will be appreciated that in alternative embodiments, any number, type and configuration of actuators may be utilised as is well known in the art of mechanical engineering to achieve the desired rotational movements of the upper and lower leg members as described in the joint section of this specification.

### Size Adjustment

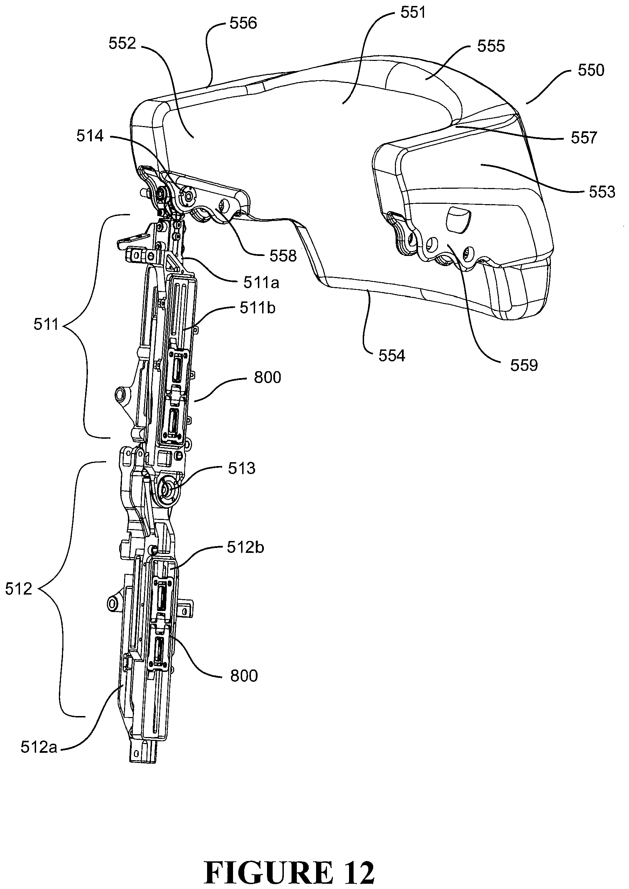

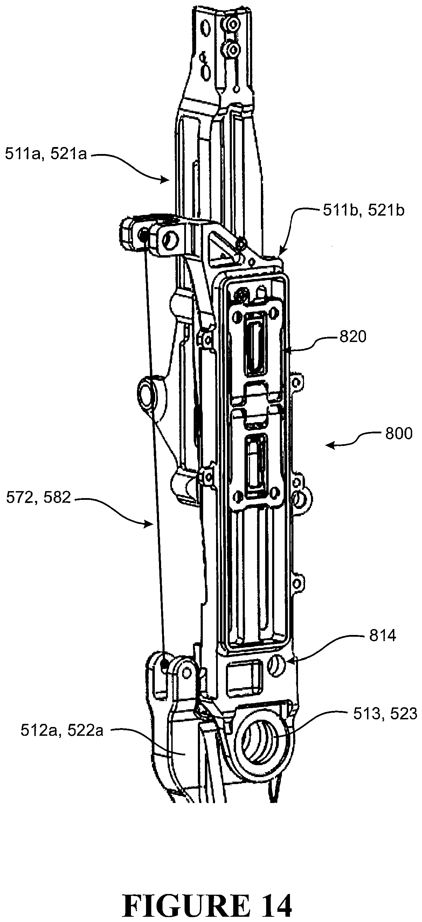

Referring to figures 12-21, to fit the WA to a user in a safe manner, it is important to ensure that the spacing between the hip joints 514/524, the knee joints 513/523 and the foot joints 515/525 are appropriate. Appropriate positioning should be where such joints are, as close as possible, aligned with the corresponding natural joints of the user. Adjustment of the position of the hip joints, knee joints and ankle joints is achieved by virtue of adjustability in the effective length of the upper leg structural members 511/521 and the lower leg structural members 512/522.

An adjustment mechanism is thus provided to each of the adjustable leg members 511/512/521/522. It will be appreciated that one or more of these member 511/512/521/522 may be adjustable or provided with an adjustment mechanism but in the preferred embodiment each member is adjustable to improve the utility and versatility of the exoskeleton 500 as will be described below.

Adjustment of the length of a leg member 511/512/521/522 will result in the relocation of the connection points associated with the actuators 571-573/581-583. To alleviate the need to also adjust the length of associated actuators to match the leg member adjustment, a mechanism is provided by the invention in which a constant distance between each pair of connection points of the associated actuators is maintained during leg member length adjustment. In other words, for each actuator having a connection point on a leg member and a connection point on another member of the exoskeleton (hip frame, foot member or other leg member for example), adjustment of the length of the leg member does not affect the length of the portion of the leg member that is between the pair of actuator connection points (or the actuator connection point on the leg member and the associated pivot joint). In this manner adjustment of the length of the leg member is confined to a region of the leg member between the pair of associated actuator connection points. This is preferably the case for all actuators associated with each leg member.

In the preferred embodiment, each leg member comprises first and second leg parts that can axially slide relative to one another along a line of adjustment. The first and second leg parts are fixable in more than one relative axial position. An adjustment mechanism or system is provided to fixedly adjust the relative position along the line of adjustment, and includes a separate locking mechanism independent of the method of adjustment which further secures the relative position of the first leg part and the second leg part or releases them sufficient for the adjustment mechanism to alter the relative positions. The adjustment mechanism comprises a shaft connected at one end with one of the first or second leg parts and at another end with a socket of the other first or second leg part, and a mechanism manipulates the shaft, the socket or both to adjust the relative axial position of the shaft within the socket. The first leg part and the second leg part include engaging rail members, and the locking mechanism is manipulable between a first condition in which it presses the rail members together and a second condition in which the rail members are more free to slide.

In the preferred embodiment, each of the upper leg members 511/521 comprises a first upper leg part 511a/521a and a second upper leg part 511b/521b. The first and second upper leg parts 511a,b/521a,b are moveably coupled to one another, and preferably slidably engageable to enable adjustment of their relative positions along a longitudinal axis of the parts. Adjustment of the relative positions of the first and second upper leg parts 511a,b/521a,b results in adjustment of the overall length of the associated upper leg member 511/521. In this manner, the exoskeleton 500 can be adjusted to fit the user's lower body dimensions.

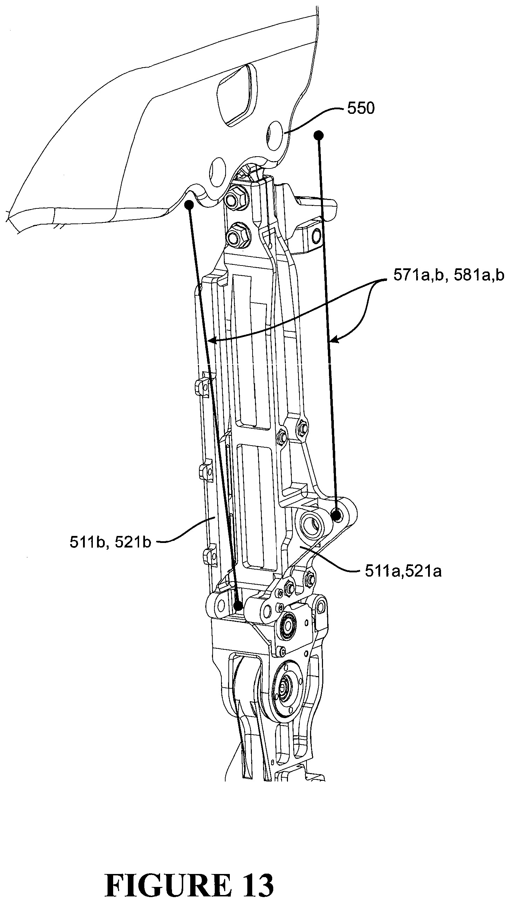

As shown in figure 13, in the preferred embodiment each upper leg actuator 571a,b/581a,b is operatively coupled to the respective upper leg parts 511a/521a of the upper leg members and to the hip frame 550. In adjusting the effective length of each upper leg member 511/521, the lower leg part 511b/521b is caused to alter its position relative to the upper leg part 511a/521a, while the upper leg part remains fixed in position relative to the hip frame 550. In this manner, adjustment of the overall length of each upper leg member 511/521 does not affect the distance between the actuator connections on the hip frame 550 and the upper leg part 511a/521a. This alleviates the need to adjust the length of the actuators 571a,b and 581a,b to suit the adjustment in length of the upper leg members 511 and 521.

As shown in figure 13, similarly in the preferred embodiment each knee actuator 572/582 is operatively coupled to the respective lower leg part 511b/521b of the upper leg member 511/521 and to the upper leg part 512a/522a of the lower leg member 512/522. In adjusting the effective length of each upper leg member 511/521, the lower leg part 511b/521b of the upper leg member 511/521 does not alter its position relative to the upper leg part 512a/522a of the lower leg member 512/522. In this manner, adjustment of the overall length of each upper leg member 511/521 does not affect the distance between the knee actuator connections. This alleviates the need to adjust the length of the knee actuator 572/582 to suit the adjustment in length of the upper leg member 511/521.

Similarly in the preferred embodiment each ankle actuator 573a,b/583a,b is operatively coupled to the respective lower leg part 511b/521b of the lower leg member 512/522 and to foot member 530/540. In adjusting the effective length of each lower leg member 512/522, the lower leg part 512b/522b does not alter its position relative to the foot member 530/540. In this manner, adjustment of the overall length of each lower leg member 512/522 does not affect the distance between the ankle actuator connections. This alleviates the need to adjust the length of the ankle actuators 573a,b/583a,b to suit the adjustment in length of the lower leg member 512/522.

An adjustment mechanism 800 is provided between the first and second upper leg parts 511a,b/521a,b of each upper leg member 511/512, and an adjustment mechanism 800 is provided between the first and second lower leg parts 512a,b/522a,b of each lower leg member 512/522. The adjustment mechanism will now be described with reference to leg member 511, but it will be appreciated that the same principles apply for the other leg members 521/512/522.

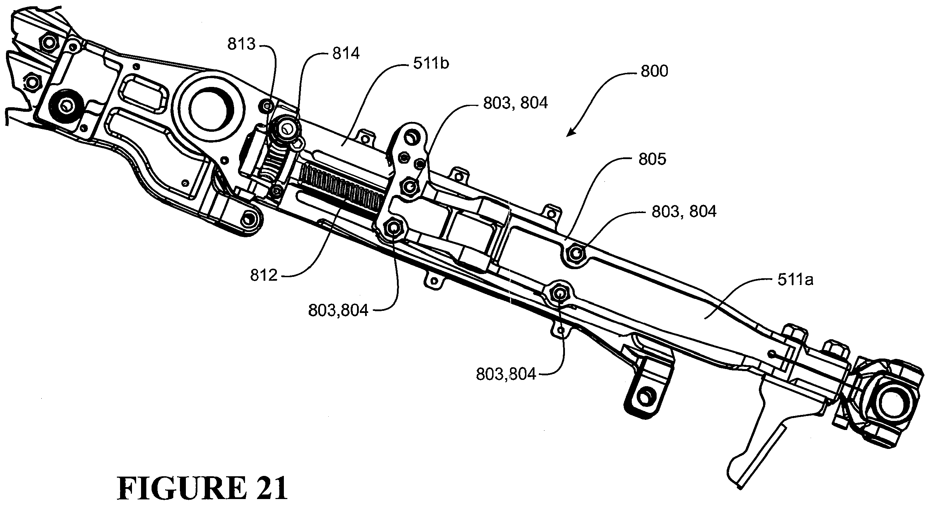

Referring to figure 21, the adjustment mechanism 800 is configured to alter the relative axial positions between the two parts 511a and 511b. The adjustment mechanism comprises a shaft 812, preferably in the form of a lead screw 812, connected at one end with one of the first or second leg parts, preferably the first part 511a, and at another end with a socket 813 of the other leg part (preferably the second leg part 511b). The shaft 812, the socket or both are manipulable to adjust the relative axial position of the shaft 812 within the socket and hence the axial positions of the leg parts 511a and 511b.

In the preferred embodiment, the mechanism comprises at the socket a worm drive 813 with a rotatable input for rotating a worm and a worm wheel connected to rotate the shaft 812, the worm engaging the worm wheel.

The lead screw 812 at one end is threadably engaged with an end of the first upper leg part 511a, and at an opposing end is threadably engaged to the worm gear 813. Rotation of the worm gear 813 causes the lead screw 812 to rotate to pull or push the respective end first upper leg part 511a depending on the direction of rotation, thereby sliding the first upper leg part 511a relative to the second upper leg part 511b in the corresponding linear direction. A rotatable bearing 814 having an aperture, preferably in the form of a hexed aperture 814 for receiving a tool or hex tool, is coupled to the worm gear 813 to enable insertion of the tool for manual rotation of the worm gear 813 via the bearing to move/slide the parts 511a and 511b relative to one another.

In the preferred embodiment, the lead screw 812 prevents slidable motion or movement of the parts 511a and 511b relative to one another without rotation of the worm gear 813. This adjustment mechanism 800 thus secures the two leg parts 511a and 511b relative to one another as well as providing a method for fixedly adjusting the relative axial positions of the parts to alter the length of the leg member 511.

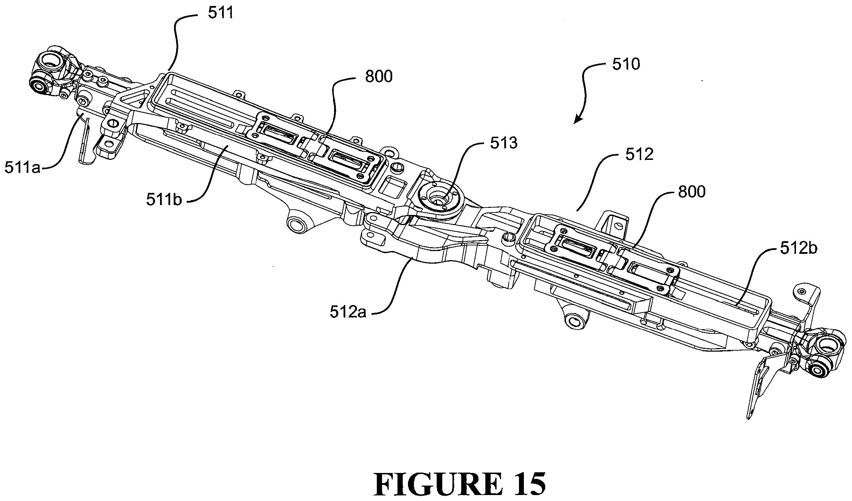

Referring to figure 15, in the preferred embodiment the adjustment mechanism 800 is provided with an additional locking mechanism configured to be operable between a locked/secured condition/state in which the respective first and second leg parts are locked/secured against each other to prevent relative movement and a change in relative longitudinal/axial positions between the two parts, and a released/moveable condition/state in which the respective first and second parts are released from a completely rigid engagement to enable relative movement and a change in relative longitudinal/axial position between the two parts.

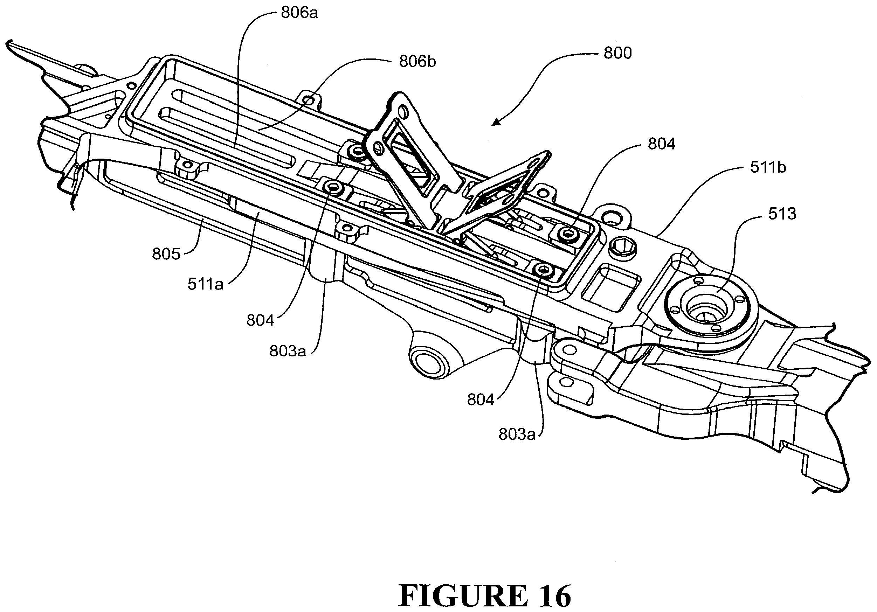

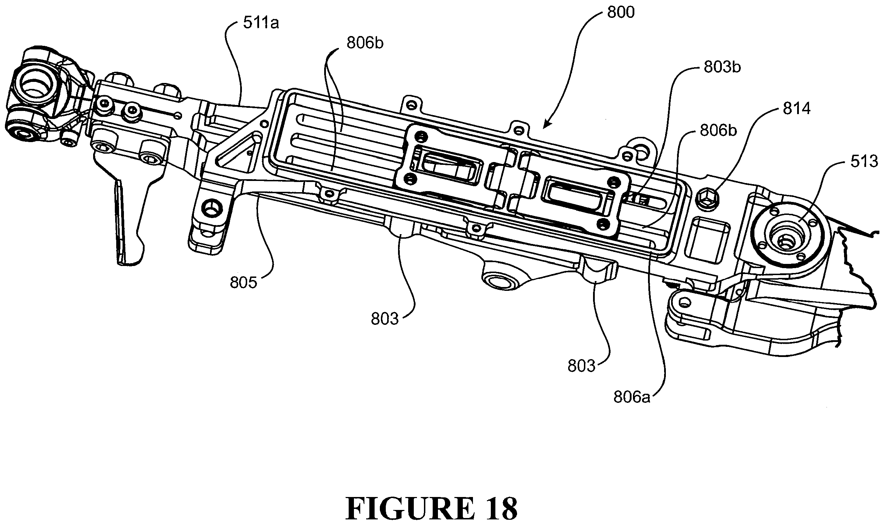

For example, figure 16 shows the locking mechanism of the first and second upper leg parts 511a and 511b of the upper leg member 511 in the released condition, and figure 18 shows the same adjustment mechanism 800 in the locked condition.

Referring to figures 16-21, the components and operation of the locking mechanism will now be described in further detail and with reference to the first and second upper leg parts 511a and 511b of the upper leg member 511.

The first upper leg part 511a comprises an engagement surface or rail member(s) 801 configured to slidably engage an opposing engagement surface or rail member(s) 802 of the second upper leg part 511b in the assembled state. The engagement surfaces 801 and 802 are preferably substantially planar but may alternatively comprise complementary formations for enabling a slidable engagement (such as a rib and groove arrangement for example). The locking mechanism is manipulable between a first condition in which it presses the rail members together and a second condition in which the rail members are freer to slide on each other. The locking mechanism is carried by the second leg part 511b and includes a bearing surface facing the first leg part 511a, and at least one lever 810 operable between a first position and a second position, the first position corresponding with the moveable condition, and the second position corresponding with the locked condition. Manipulation of the lever 810 from the first position to the second position urges the bearing surface against the first leg part. The lever includes an over centre mechanism, such that in the movement of closing the lever from the unlocked to the locked position, the required force initially increases, and then reduces.

In the preferred embodiment, the first upper leg part 511a further comprises four (but alternatively any number of one or more) apertures 803, each configured to receive an associated fastener 804 of the locking mechanism there through. Each aperture 803 extends through the leg part 511a from the engagement surface 801 to an opposing surface 805 of the first upper leg part 511a.

In the preferred embodiment, a first pair of apertures 803a is provided on one side of the first upper leg part 511a, and a second pair of apertures 803b is provided on an opposing side of the first upper leg part 511a. The second upper leg part 511b comprises a pair of elongate channels 806a and 806b (but may be one or more channels depending on the number and location of corresponding apertures 803) corresponding to the two pairs of apertures 803a and 803b respectively. In particular, channel 806a is configured to align with apertures 803a when the surfaces 801 and 802 of the two parts are engaged, and channel 806b is configured to align with apertures 803b when the surfaces 801 and 802 of the two parts are engaged. The channels 806a and 806b are substantially parallel and extend along a length of the second upper leg part 511b. The length of the channels defines the range of length adjustment provided by the upper leg part 511 of the exoskeleton. Fasteners 804 extend through the respective channel 806a or 806b from the second upper leg part 511b to the surface 805 of the first upper leg part 511a. One or more abutments may also be provided on either or both parts 511a and 511b to limit the range of length adjustment provided by the mechanism 800.

To lock the relative positions of the first and second upper leg parts 511a and 511b in place, the locking mechanism is operated to clamp the two parts together by placing outward tension on the fastener heads at either end of each fastener 804. This secures the fasteners 804 in position within the respective channels 806. To release the rigid connection between the two parts and enable adjustment of the relative positions, the locking mechanism is operated to release the tension on the fastener heads thereby allowing movement of the fasteners 804 along the respective channels 806.

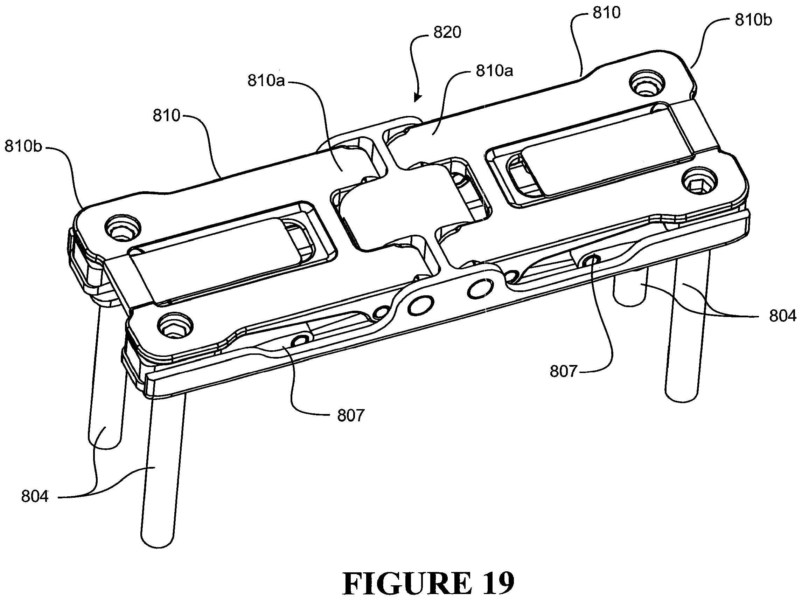

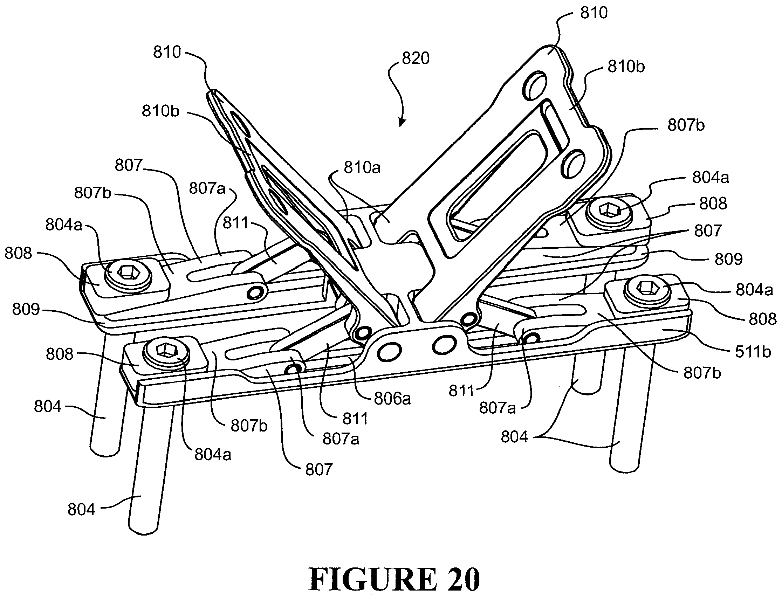

Referring particularly to figures 19 and 20, the preferred form adjustment mechanism 800 comprises a wedge 807 and a washer 808 associated with each fastener 804. In the assembled state, the wedge 807 is located against a surface 809 of the second upper leg member 511b opposing the engagement surface 802 and adjacent or bridging the respective channel 806, and the washer 808 is located between the wedge 807 and a head 804a of the fastener 804. The wedge 807 is ramped along its longitudinal axis from a relatively large end 807a to a relatively small end 807b. As shown in figure 20, in the released position of the lever 810, the wedge 807 is located with the relatively small end 807b adjacent the washer 808. This releases the effective tension between the head 804a of the fastener 804 and the surface 809 of the first upper part 511b allowing the fastener 804 and thus the first upper leg part 511a connected to the fastener 804 to move relative to the second upper leg part 511b along the respective channels 806. As shown in figure 19, in the locked position of the lever 810, the wedge 807 is located with the relatively large end 807a adjacent the washer 808. This increases the effective tension between the head 804a of the fastener 804 and the surface 809 of the first upper part 511b to prevent the fastener 804 and thus the first upper leg part 511a from moving relative to the second upper leg part 511b along the respective channels 806.

The clamping arms or levers 810 are pivotally coupled to the second upper leg part 511b adjacent the face 809. Each clamping arm 810 is pivotable relative to the second upper leg part 511b between a locked position and a released position to lock and release the two parts respectively. In the preferred embodiment, in the locking position the lever 810 has its free end 810b located adjacent the channels 806 and in the releasing position the lever has its free end 810b located away from the channels 806. Pivotal movement of each arm 810 between these two positions results in the movement of respective wedges 807 to the associated locked and released positions. A link arm 811 associated with each wedge 807 is pivotally coupled at one end to the wedge 807 (preferably the larger end 807a of the wedge 807) and at an opposing end to the adjacent lever 810. As the lever is rotated from the released position to the locked position, each link arm 811 is caused to rotate and push the larger end of the respective wedge 807 towards the washer 808 and fastener 804. As the lever is rotated from the locked position to the released position, each link arm 811 is caused to rotate in the opposite direction to pull the larger end 807a of the respective wedge 807 away from the washer 808 and fastener 804.

The two levers 810 are preferably arranged to be rotated in opposing directions towards one another to release the tension on all four fasteners and unlock the two parts 511a and 511b, and arranged to be rotated in opposing directions away from one another to increase the tension on all four fasteners and lock the two parts 511a and 511b together. The pivot axes on either end of each link arm 811, and the pivot axis of each lever are preferably substantially parallel relative to each another and preferably substantially orthogonal along a transverse axis relative to the longitudinal axis of the second upper leg part 511b.

Referring now to figure 21 in the released/moveable condition of the locking mechanism 800, the upper and lower leg parts 511a and 511b are configured to slidably move relative to one another via the adjustment mechanism 800. However, it will be appreciated that in alternative embodiment this movement may be achieved manually by directly moving one or both parts 511a and 511b without the need for an additional adjustment mechanism 800. In the preferred embodiment however, the combination of an adjustment mechanism 800 including an addition locking mechanism provides added security as it provides a more rigid and secure coupling between the two parts 511a and 511b.

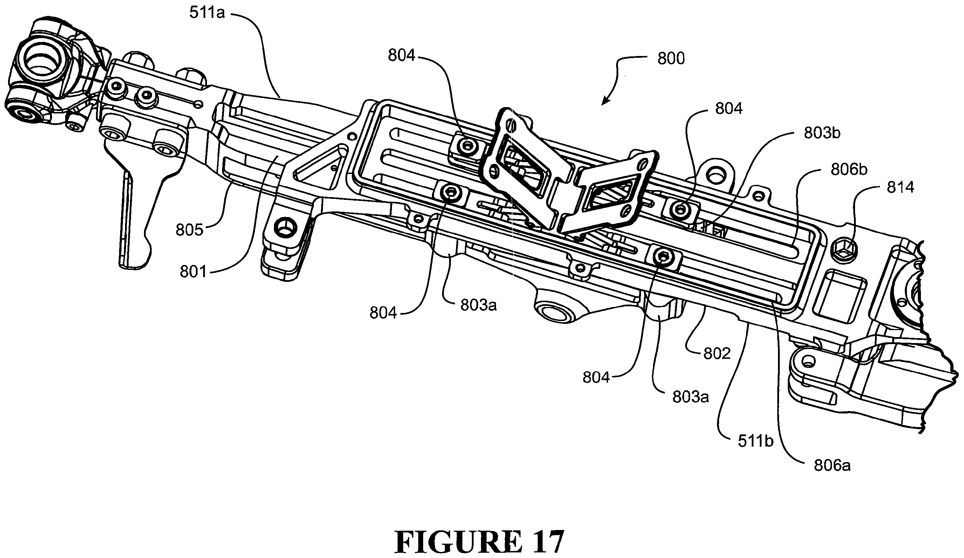

During operation, to adjust the overall length of the upper leg part 511a, the two levers are moved from the locked position to the released position (figure 17). The first and second upper leg members 511a and 511b are now more free to slide relative to one another to adjust the overall length of member 511 via rotation of the worm gear 813. Once the desired overall length is achieved, the levers are moved towards the locked position to secure the two parts 511a and 512b in position relative to one another (figure 18).

In the preferred embodiment, a similar adjustment and locking mechanism 800 as described above with reference to the first and second upper leg parts 511a and 511b of the upper leg member 511 is provided to the first and second upper leg parts 521a and 521b of the upper leg member 521, and to the first and second lower leg parts 512a and 512b of the lower leg member 512, and to the first and second lower leg parts 522a and 522b of the lower leg member 522.

### Prevention of Knee Hyperextension

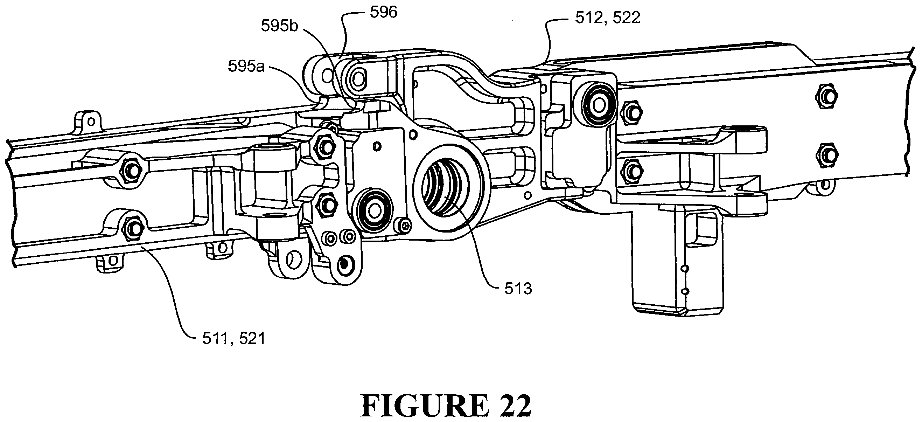

Referring to figure 22, in the preferred embodiment a substantially rigid mechanical stop 595 is provided to limit pivotal motion of the lower leg member 520 relative to the upper leg member 510/520 in the direction of extension about the axis 513A/523A. The mechanical stop 595 is provided to each leg structure to prevent hyperextension of the associated knee. The mechanical stop may take on any or more of a number of forms or configurations to achieve this limit in movement.

In the preferred embodiment, at least one substantially rigid abutment 595 protrudes outwardly from each upper leg member 511/521 in the anterior direction (and in particular the lower part 511b/521b of the upper leg member 511/521) adjacent the knee joint 513/523. A substantially rigid extended end 596 of the respective lower leg member 512/522 (and in particular the upper part 512a/522a of the lower leg member 512/522), adjacent the knee joint 513/523, is configured to engage the abutment 595 when the lower leg member 512/522 is extended about the knee joint 513/523 to an orientation that is substantially parallel to the orientation of the upper leg member 511/521 - i.e. the angle between the upper and lower leg members is approximately 180 degrees. In this manner, the lower leg member 512/522 is prevented from hyper extending outwardly of said knee joint 513A/523A.

There are preferably a pair of substantially rigid abutments 595a and 595b protruding adjacent one another at the knee joint 513/523 of each leg member 510/520. Each abutment 595a/595b is configured to engage a corresponding substantially rigid side of a clevis 596 of the lower leg member 512/522. The clevis 596 is configured to couple an end of the knee actuator 572/582.

The abutment or abutments 595 are preferably integrally formed with the leg member 511/521. In alternative embodiments, the abutment or abutments 595 are separate components that can be removably or fixedly coupled to the appropriate leg part or location on the exoskeleton to limit the extent of rotation of the lower leg member in the extension direction.

It will be appreciated that a mechanical stop may be provided at another location on the leg members 510 and 520 in alternative embodiments, to limit pivotal movement of the lower leg members 512 and 522 about the knee joints 513 and 523 in the direction of extension. For instance, in an alternative embodiment, a mechanical stop is provided in each knee actuator 572/582 to limit the length of contraction that can be achieved by the actuator (or the length of extension if this is the direction the actuator achieves extension of the associated lower leg member 512/522) to prevent hyperextension of the lower leg member 512/522 about the knee joint 513/523.

### Protective Outer Covers

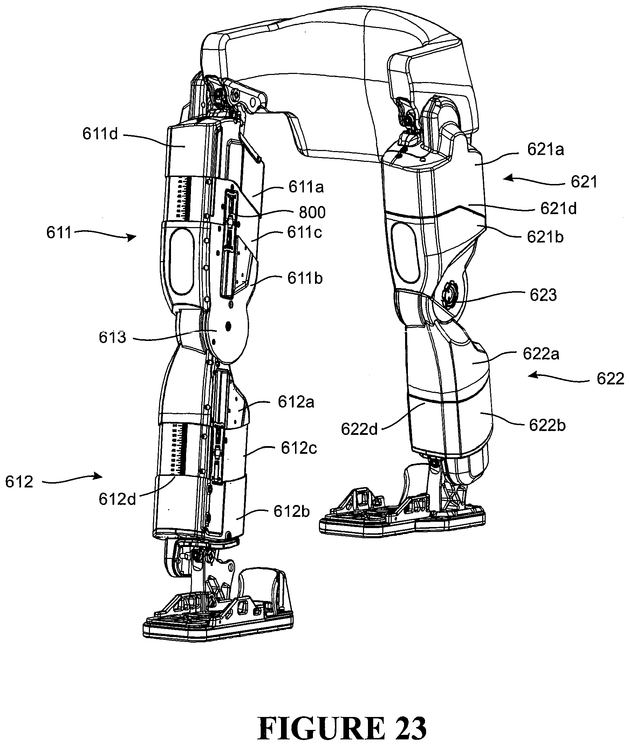

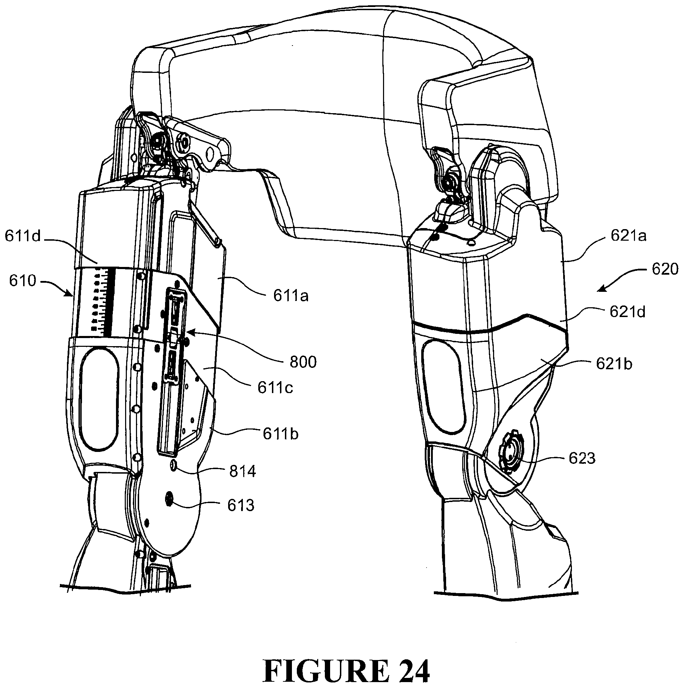

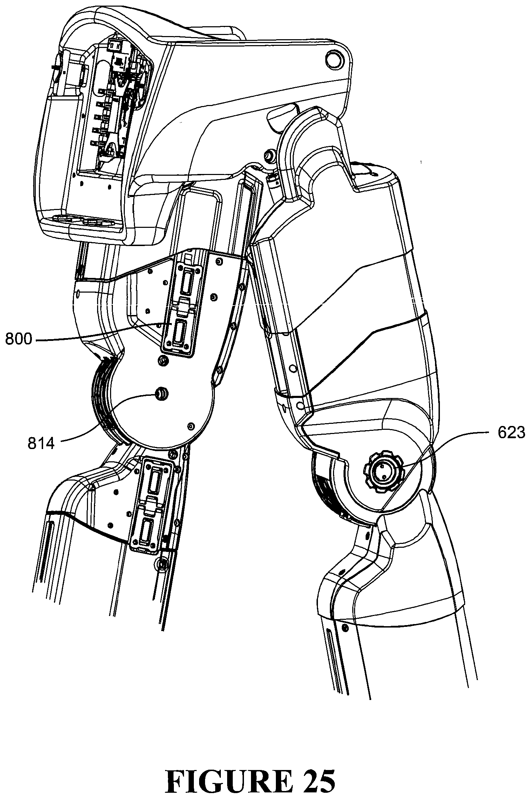

Referring to figures 23-25, in the preferred embodiment the leg structures 510 and 520 are further provided with outer covers 600 to protect and visibly hide the components of the leg structures, including the upper and lower leg members, the actuators and the joints. Each leg structure 510/520 is provided with a set of hollow covers 610/620 configured to substantially house/enclose the upper and lower leg members, the actuators and the joints of the structure 510/520. Each set of covers 610/620 comprises an upper cover member 611/621 and a lower cover member 612/622. The upper and lower cover members are hingedly/pivotally coupled to one another about a joint 613/623 of the covers. The joint 613/623 is at the intersection between the lower end 611b/621b of the upper cover member 611/621 and the upper end 612a/622a of the lower cover member 612/622. The joint 613/623 in the assembled state of the covers is configured to locate and house about the respective knee joint 513/523 of the leg structure 510/520.

The upper and lower cover members are substantially elongate, hollow structures having a substantially cylindrical or other elongate prism like profile to enclose the respective leg members.

In the preferred embodiment, each upper leg cover member 611/621 comprises an upper cover part 611a/621a and a lower cover part 611b/621b. The upper and lower cover parts are telescopingly engaged to enable size adjustment of the upper cover member 611/621.

The cover parts can be relatively extended or retracted to lengthen or shorten the upper leg cover member 611/621. In the preferred embodiment, the upper cover part 611a/621a comprises a flanged section or extension 611c/621c of a relatively smaller outer diameter/size configured to be telescopingly received within the hollow lower cover part 611b/621b having a relatively larger internal diameter/size than the outer diameter/size of the flanged section. The upper cover member 611/621 comprises relatively larger outer diameter/size section 611d/621d that is substantially similar in size to the outer diameter/size of the lower cover part 611b/621b at the end adjacent the upper cover part. In this manner, a limit or stop is provided between the larger section 611d/621d of the upper cover part and the end of the lower cover part 611b/621b to define a lower size limit of the upper leg cover member 611/621. This lower size limit is shown in upper leg cover member 621. An abutment, stop or limit may also be provided to limit the extent of relative movement of the cover parts 611a/621a and 611b/621b in the other direction, i.e. to increase the length of the cover member 611/621 thereby providing an upper size threshold. In alternative embodiments, the lower cover part may comprise a section configured to be telescopingly received within the upper cover part instead. The upper cover part 611a/621a is coupled to the upper leg part 511a/521a of the upper leg member 511/521 (preferably at the section 611c/621c) and the lower cover part 611b/621b is coupled to the lower leg part 511b/521b of the upper leg member 511/521. In this manner, adjustment of the length of the upper leg member 511/521 results in movement of the upper 611a/621a and lower 611b/621b cover parts of the upper cover member 611/621. The cover member 611/621 is thus self adjustable to match the adjustment of the associated leg member 511/521 in use.

The upper and lower cover parts may each be formed as one piece or multiple pieces that are assembled to form the respective cover part.

In a preferred embodiment the upper 611a/621a and lower 611b/621b cover parts comprise recesses configured to locate adjacent the locking mechanism 800 of the upper leg member 511/521 for exposing at least the levers 810 of the locking mechanism 800 to enable user access to the mechanism. Furthermore, the lower cover part 611b/621b comprises a recess configured to locate adjacent the aperture of the adjustment bearing 814 of the mechanism 800 for receiving the tool to adjust the size of the upper leg member 511/521.

Indicia 631 may be provided on the telescoping section 611c/621c to provide information on the size of the leg member 511/521. Indicia 631 include information printed or otherwise displayed axially along the section 611c/621c to indicate relative sizes of the leg member 511/521. As the cover parts 611a/621a and 611b/621b are moved relative to one another, some, all or none of the indicia 631 become visible or hidden to indicate to the user the corresponding size of the leg member 511/521.

In the preferred embodiment, similarly each lower leg cover member 612/622 comprises an upper cover part 612a/622a and a lower cover part 612b/622b. The upper and lower cover parts are telescopingly engaged to enable size adjustment of the lower cover member 612/622. The cover parts can be relatively extended or retracted to lengthen or shorten the lower leg cover member 612/622. In the preferred embodiment, the lower cover part 612b/622b comprises a section or extension 612c/622c having a relatively smaller diameter and configured to be telescopingly received within the hollow upper cover part 612a/622a having a relatively larger internal diameter/size than the outer diameter/size of the flanged section. The lower cover member 611/621 comprises relatively larger outer diameter/size section 612d/622d that is substantially similar in size to the outer diameter/size of the upper cover part 612a/622a at the end adjacent the lower cover part. In this manner, a limit or stop is provided between the larger section 612d/622d of the lower cover part and the end of the upper cover part 612a/622a to define a lower size limit of the upper leg cover member 612/622. This lower size limit is shown in lower leg cover member 622. An abutment, stop or limit may also be provided to limit the extent of relative movement of the cover parts 612a/622a and 612b/622b in the other direction, i.e. to increase the length of the cover member 612/622 thereby providing an upper size threshold. In alternative embodiments, the upper cover part may comprise a section configured to be telescopingly received within the lower cover part instead. The upper cover part 612a/622a is coupled to the upper leg part 512a/522a of the lower leg member 512/522 and the lower cover part 612b/622b is coupled to the lower leg part 512b/522b of the lower leg member 512/522 (preferably at the section 612c/622c). In this manner, adjustment of the length of the lower leg member 512/522 results in movement of the upper 612a/622a and lower 612b/622b cover parts of the lower cover member 612/622. The cover member 612/622 is thus self adjustable to match the adjustment of the associated leg member 512/522 in use.

The upper and lower cover parts may each be formed as one piece or multiple pieces that are assembled to form the respective cover part.

In a preferred embodiment the upper 612a/622a and lower 612b/622b cover parts comprise recesses configured to locate adjacent the locking mechanism 800 of the lower leg member 512/522 for exposing at least the levers 810 of the locking mechanism 800 to enable user access to the mechanism. Furthermore, the upper cover part 612a/622a comprises a recess configured to locate adjacent the aperture of the adjustment bearing 814 of the mechanism 800 for receiving the tool to adjust the size of the lower leg member 512/522.

Indicia 632 may be provided on the telescoping section 612c/622c to provide information on the size of the leg member 511/521. Indicia 632 include information printed or otherwise displayed axially along the section 612c/622c to indicate relative sizes of the leg member 512/522. As the cover parts 612a/622a and 612b/622b are moved relative to one another, some, all or none of the indicia 632 become visible or hidden to indicate to the user the corresponding size of the leg member 512/522.

Figure 23 shows the outer covers 610 of leg structure 510 fully extended and the outer covers 620 of leg structure 520 fully retracted.

### 2.2 Securing mechanism

Referring to figure 2, each of the upper leg members 511/521 and each of the lower leg members 512/522 include a fastening arrangement in the form of adjustable fasteners 591/592 for fastening the associated legs of the user to the respective leg structures. The fasteners 591/592 are preferably adjustable in size. It is envisaged that the fasteners 591/592 may be comprises of flexible webbing or strap, and can include an adjustable fastening arrangement, which could be in the form a hook and loop fastener mechanism passing through a buckle. Alternatively the adjustable fastening arrangement can include a typical buckle, ratchet buckle or catch formation.

In one embodiment the securing arrangement includes orthotics positioned, configured and designed to ensure correct alignment of the users limbs and joints and can also include straps or webbing as described above.

### 2.3 Foot Structures

### Ankle Joint

Referring to figures 5 and 6, a lower end 512b/522b of each lower leg member 512/522 is pivotally coupled to the respective foot member 530/540 by an ankle joint 515/525. Each ankle joint 515/525 enables relative rotation between the respective lower leg and foot members about at least one, but preferably two substantially orthogonal axes. In particular, each ankle joint enables relative rotation about a primary axis 515A/525A to achieve ankle/foot dorsiflexion and ankle/foot plantar flexion movements. The primary axis 515A/525A is substantially parallel to hip and knee joint axes 514A and 513A/523A and the transverse and coronal planes of the user, and allows rotation in the superior and inferior directions. Each ankle joint is preferably further configured to enable relative rotation about a secondary axis 515B/525B substantially orthogonal to the primary axis 513A/523A to achieve ankle/foot inversion and ankle/foot eversion movements. The secondary axis 515B/525B is substantially parallel to the transverse and sagittal planes of the user, and allows rotation in the lateral and medial directions. Each ankle joint 515/525 enables relative rotation between the lower leg member 512/522 and the associated foot member 530/540 about the primary axis 515A/515B within a range of about 0-30 degrees either side of a neutral position of the foot member 530/540, and about the secondary axis 515B/525B within a range of about 0-10 degrees, and more preferably within a range of about 0-6 degrees either side of a neutral position of the foot member 530/540. In the preferred embodiment the ankle joint is in the form of a rose joint. Each ankle joint 515/525 is limited in its movement in the lateral and medial directions by a pair of horizontally aligned plastic, and preferably acetyl, bushes disposed either side of the rose joint.

In the preferred embodiment, each ankle joint 515/525 is configured with its primary axis of rotation 515A/525A extending downwardly in a lateral direction at an angle of between zero and 6 degrees, and more preferably at about four degrees.

It will be appreciated that in alternative embodiments, the ankle joints 515/525 may be configured to enable relative rotation between the associated parts along any combination of Sagittal, Coronal and/or Transverse planes of the user depending on the desired/required level of complexity of the WA 100 and/or the desired/required level of similarity with the associated human joint. For example, in alternative embodiments, the knee joints 515 and 525 may in addition to the primary and/or secondary axes 515A/525A or 515B/525B enable abduction and adduction of the foot, about an axis substantially parallel to the sagittal and coronal planes in the lateral and medial directions. The degree of movement or rotation along any one or more of these planes may be limited in one or more directions in accordance with the capabilities of the associated human joint.

### Actuators

Referring now to figures 5-7, the exoskeleton comprises a pair of moveable foot members 530 and 540, coupled to the leg structures 510 and 520 respectively and configured to assist in the movement of the user's feet. Each foot member 530/540 comprises a foot support 531/541 and associated actuators 573/583 for effecting movement of the foot support 531/541 relative to the associated lower leg member 512/522. The foot members 530 and 540 each provide an adjustment mechanism for adjusting the location of a user's foot relative to the associated ankle joint 515/525.

In the preferred embodiment, each lower leg member 512/522 is operatively coupled to a pair of associated ankle actuators 573a,b/583a,b. A primary electromechanical actuator 573a/583a is operatively coupled at one end to a connection point on the lower leg member 512/522 and at an opposing end to a connection point on the foot member 530/540 and is configured to move the foot member about the ankle joint 515/525 to achieve dorsiflexion and plantar flexion movements of the foot member 530/540 about an axis 515A/525A. A secondary electromechanical actuator 573b/583b is operatively coupled at one end to a connection point on the lower leg member 512/522 and at an opposing end to a connection point on the foot member 530/540 and is configured to move the foot member 530/540 about the ankle joint 515/525 to achieve inversion and eversion movements about a second axis 515B/525B. The connection points are each fixed in position relative to the upper leg member and the hip joint respectively.

The primary and secondary actuators 573a,b/583a,b are linear actuators. Extension of each actuator causes the corresponding foot member 530/540 to move along the corresponding plane in the corresponding direction, and retraction of the actuator causes the foot member 530/540 to move along the plane in an opposing direction. Linear movement of the actuators 573 and 583 is translated into pivotal movement of foot members 530 and 540 by action of the ankle joints 515 and 525.

To provide a low profile exoskeleton 500, each linear actuator is arranged substantially parallel to the corresponding lower leg member to provide for a low profile exoskeleton 500. Each primary actuator 573a/583a is pivotally coupled to the foot member 530/540 behind the ankle joint 515/525 (in a direction of forward motion of the exoskeleton) and configured to pivot about two substantially orthogonal axes, for example along the sagittal plane in the anterior and posterior direction and along the coronal plane in the lateral and medial directions. Each secondary actuator 573b/583b is pivotally coupled to the side of ankle joint 515/525 and configured to pivot about an axis substantially orthogonal to the two axes of the primary actuator.

The linear actuators used are preferably low voltage DC actuators with position feedback through a sensor in the actuator. Typically, each actuator would be caused to move by an electric motor (not shown) driving a worm gear (not shown), which causes the actuator arm to extend or retract.

It will be appreciated that in alternative embodiments, any number, type and configuration of actuators may be utilised as is well known in the art of mechanical engineering to achieve the desired rotational movements of the foot members as described in the joint section of this specification.

### Adjustment

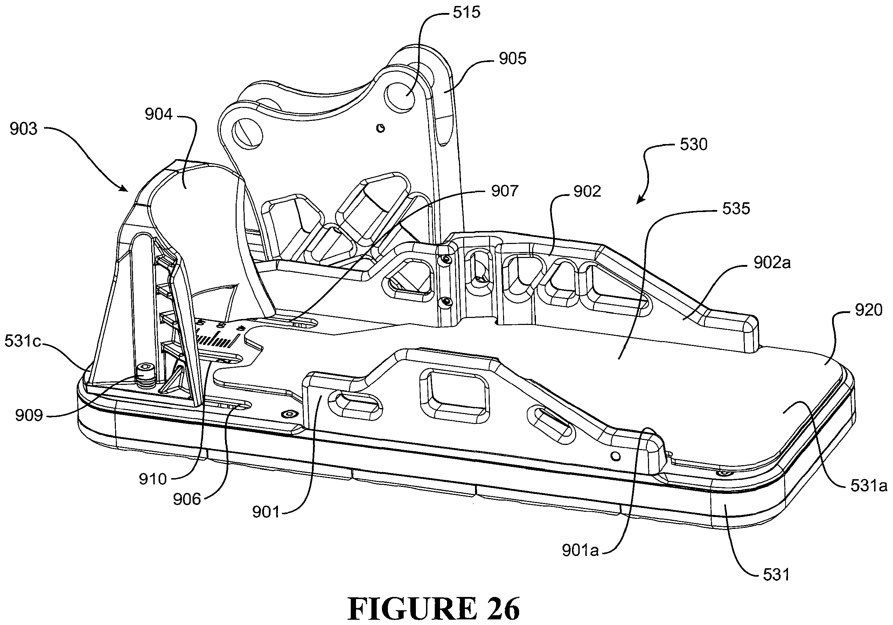

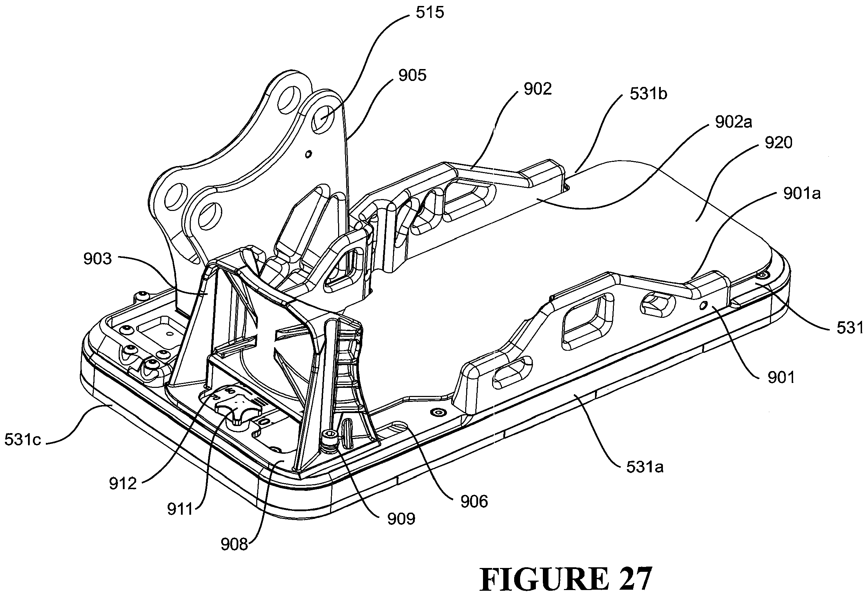

Referring to figures 26-28, in the preferred embodiment each foot member 530/540 comprises an adjustment mechanism 900 for appropriately aligning the position of the user's ankle joint with the position of the ankle joint 515/525 of the exoskeleton 500. The adjustment mechanism enables adjustment to substantially align the ankle of the user with one of the pivot axes 515A/525A and 515B/525B of the ankle joint, but preferably both pivot axes (i.e. preferably align the user's ankle with the intersection of both pivot axes of the ankle joint). The adjustment mechanism enables adjustment of the location of the user's ankle either laterally or longitudinally relative to the ankle joint 515/525, but preferably both laterally and longitudinally.

The adjustment mechanism 900 will now be described relative to the foot member 530. The foot member comprises a bounded region 535 within which a user's foot is received. The bounded region 535 is adapted to define the location of the user's foot on the foot member 530. The region 535 may be substantially enclosed from all sides or alternatively open from some sides and only enclosed from one or more. In particular, the bounded region 535 requires a base 531 and at least one wall extending from the base to define the location of the user's foot on the foot member 530.

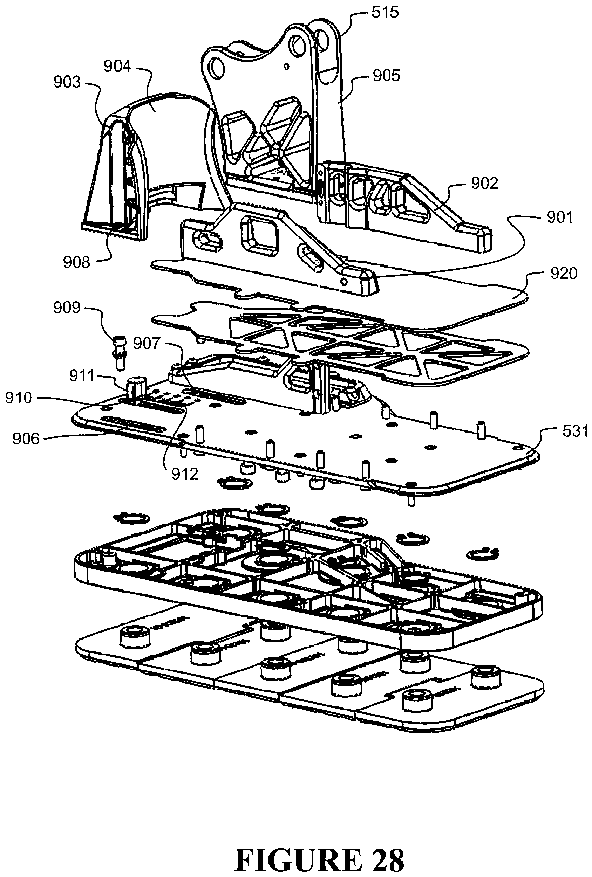

In the preferred embodiment, the foot member 530 comprises a base 531 having a support surface 531a configured to support a user's foot thereon. The base 531 is preferably substantially rectangular but may alternatively be any other polygonal shape desired/required for the particular application. As shown in figure 28 the base may comprises one or more plates and one or more spring members between the plates of the base to provide a dampened structure. An under surface of the base may be provided with pressure and/or tactile sensors for the control system to analyse a state of a foot structure during execution of a movement sequence or instruction. The pressure sensors may be arranged in regions within the surface to provide the relevant information to the associated control system.

A pair of opposed retention walls 901 and 902 extends laterally and substantially orthogonally to the base 531 at sides 531a and 531b of the base 531. In use, a user's foot is supported on the base 531 and at least transversely confined within the bounds of the retention walls 901 and 902. A lateral heel support 903 extends from an end (a back end) 531c of the base 531 to further confine the user's foot. The heel support 903 comprises a recess 904 for receiving and retaining a user's heel therein. The recess 904 comprises a smooth, concave surface for wrapping about a user's heel resting against the surface. In combination, the support surface 531a, the retention walls 901 and 902 and the heel support 903 define the boundaries of the bounded region 535 for receiving and retaining the user's foot.

A connector comprising a clevis 905 extends adjacent an outer side of the heel support 903 laterally from the base 531 to couple the foot member 530 to the associated leg structure 510 and actuators 573a,b. The connector 905 defines the fixed location of the ankle joint 515. A second clevis 905b on the connector defines the connection point with the primary ankle actuator.

An adjustment mechanism 900 is provided to fixedly adjust the location of the bounded region 535 relative to the ankle joint 515. In particular, at least one boundary of the region 535, including the heel support 903 and/or the support surface 531a, is adjustable in position relative to the ankle joint in at least one axis to relocate the bounded region 535. In the preferred embodiment, the heel support 903 is adjustable axially along the foot member 530, and the support surface 531a is adjusted laterally along a substantially vertical direction.

The heel support 903 is adjustable in position relative to the connector 905. In the preferred embodiment, the position of the heel support 903 is adjustable along the longitudinal length of the foot member 530 to adjust the position of the heel support 903 relative to the connector 905. The base portion comprises at least one, but preferably a pair of elongate guide channels 906 and 907 extending substantially parallel to one another and substantially longitudinally from the back end 531c of the base 531 towards a predetermined threshold location. A base 908 of the heel support 903 is slidably engaged on either side with the channels 906 and 907 through fasteners 909. An elongate adjustment channel 910, intermediate the two elongate channels 906 and 907 also extends longitudinally from the back end 531c towards a predetermined location. The base 908 of the heel support 903 slidably engages the base 531 of the foot member 530 and is moveably coupled to the adjustment channel 910 to enable adjustment of the location of heel support 903 along the channel 910 and the guide channels 906 and 907. This provides adjustment of position of the heel support 903 relative to the ankle joint 515 in the longitudinal direction.

A fastener 911 is provided to lock the heel support 903 against the base 531 to prevent movement relative to the base 531, or release the heel support 903 from secured engagement against the base 531 enabling movement relative to the base 531. The fastener 911 provides tension between the base 908 of the heel support 903 and the base 531 of the foot member 530 in the locked position to secure the heel support 903 in a position relative to the channel 910, or alternatively releases tension between the base 908 of the heel support 903 and the base 531 of the foot member in the released position to enable movement of the heel support 903 relative to the channel 910.

Indicia 912 may be provided adjacent the adjustment channel 910 to indicate adjustment values associated with the relative position of the heel support 903 along the channel 910. It will be appreciated that the guide channels 906 and 907 may not be provided in alternative embodiments but provide the benefit of preventing rotation of the heel support 903 about a substantially vertical axis in the preferred embodiment.

In the preferred embodiment the support surface 531a is adjustable in position relative to the ankle joint 515 in at least a substantially vertical axis. The support surface 531a is adjustable via adjustment of the level of elevation of the support surface 531a.

In the preferred embodiment, one or more packer elements or plates 920 are provided to enable height adjustment of the support surface 531a and hence the user's foot relative to the ankle joint 515 of the exoskeleton 500. In particular, one or more packers 920 having the same or varying thicknesses can retained within the retention walls 901 and 902 to increase the height of the base 531 of the foot member. The outer periphery of each packer is preferably complementary to the inner periphery 901a and 902a of the retention walls 901 and 902 to provide a fixed engagement between the packers and the retention walls. The packers 920 may be of a thickness of approximately 0.1-20mm for example, and more preferably approximately 0.5-15mm and most preferably approximately 1-10mm. The packers may come in thicknesses of approximately 8, 4, 2, or 1mm for example. Any combination of one or more packers 920 may be used to increase the height of the base 531 of the foot member 530 to adjust the position of the user's foot laterally relative to the ankle joint 515.

The packers 920 are preferably formed from a substantially soft plastics material, for example a low to medium density Polyethylene. Other materials may be used for the packer elements 920, such as a rigid plastics or metal material, but most preferably a substantially soft and resilient material that is comfortable to the wearer is used.

A similar adjustment mechanism 900 is provided to the foot support 540 to enable adjustment of the user's foot relative to the ankle joint 525.

### 2.4 Hip Frame

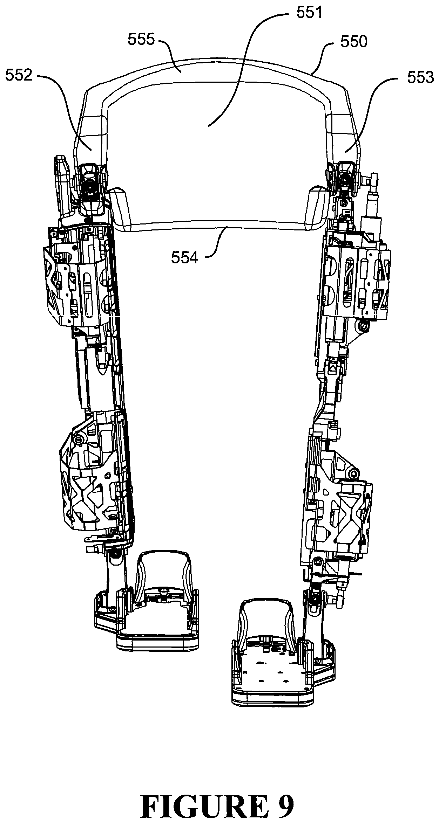

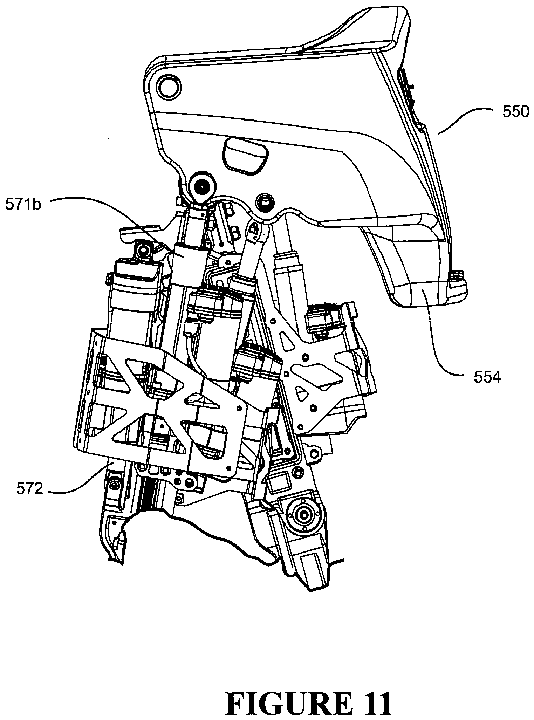

Referring to figures 7-12, in the preferred embodiment the hip frame 550 is relatively low weight and has a relatively high level of rigidity to minimise flexing during operation of the exoskeleton 500. The hip frame 550 is preferably moulded from carbon fibre as a single unit. The hip frame 550 comprises an internal hollow space (not shown) including transverse shear webs extending across the hollow space. It is envisaged that the hip frame 550 may also be formed from glass fibre but can alternatively be formed from any other suitable material known in the art.

The hip frame 550 is configured to support the user's posterior and comprises a back support 551 and a pair of retention arms 552 and 553 extending transversely from either side of the back support 551. The back support 551 and arms 552 and 553 form a generally U-shaped frame 550 in cross-section across the width of the frame 550 to provide an internal recess configured to receive and retain the a lower back and hip region of a user. In the preferred embodiment the back support 551 is configured to extend from an (extended) end 554 configured to brace against a user's pelvic or cervical region in use to an opposing end 555 configured to brace against a user's lumbar or lower thoracic region (mid-lower back region).

The arms 552 and 553 are each formed with a substantially ergonomic upper surface 556 and 557 for enabling a user to rest their arms there upon. Rigid formations 558 and 559 are provided at an opposing end of each arm to the upper surface 556/557 for coupling the hip joint 514/524 of the associated leg structure. A channel or recess 558/559 is provided on an underside of each arm 552/553 to each form a pair of clevises for rotatably retaining the associated hip joint 514/524 and the associated end of the primary actuator 571a/581a.

Referring back to figure 2, a pelvic harness 560 may be provided to hold the user appropriately within the hip frame 550. The harness may include braces, tethers, strapping, a harness or webbing to hold the user's hips snugly to the hip frame 550. The harness 560 preferably includes adjustable straps or webbing which extend about the legs of a user and that may be fastened and released appropriately by the user in use. The webbing may be adjustable in length to vary the size and level of retention according to the user. The webbing may include any suitable fastening system, including clip connectors and/or hook and loop fasteners for facilitating entry and exit into the exoskeleton 500. In the preferred embodiment, three releasable straps or webbing are provided. A first strap is configured to extend across the waist of the user and is coupled at either end to the arms 552 and 553 of the hip frame 550. The strap comprises an intermediate connector for releasing and engaging the two strap segments of the strap. A pair of upper leg straps are also provided, each configured to across an inner thigh of a leg of the user and up to a respective hip. A corresponding connector is provided on the adjacent arm 552/553 of the hip frame 550 to releasably engage the strap to the frame 550 and secure the user's leg therein. This arrangement ensures the user remains firmly secured within the hip frame 550.

A packing arrangement (not shown) composed of material such as a wedge shaped foam or foamed plastic may also be provided and optionally used to ensure a snug fit by the user in the hip frame 550. It is also envisaged that the packing arrangement could be an inflatable thin walled pressure vessel (not shown).

In some embodiments, the exoskeleton 500 may be further provided with one or more torso harnesses or upper body braces that are attached to the hip frame 550. The upper body brace can be provided for users that have limited upper body control for example. This upper body brace may include a frame or corset that is actuated to move the user's upper body to help with their balance. In one embodiment, the torso harness can be connected to the pelvic harness 560.

### 2.5 User Control

The WA is primarily controlled by a user by way of a joystick 593 and keypad 594 operatively positioned at waist height. The joystick 593 and keypad 594 may be supported by an arm 595. The arm 595 may be pivotable relative to the exoskeleton to move between at least one operational position and at least one retired position. The operational position may be one where the arm extends substantially horizontally with the keypad and joystick at waist height and/or extends substantially vertically with the keypad and joystick adjacent the user's upper leg. The retired position may be one where the arm extends substantially vertically.

### 3. CONTROL SYSTEM

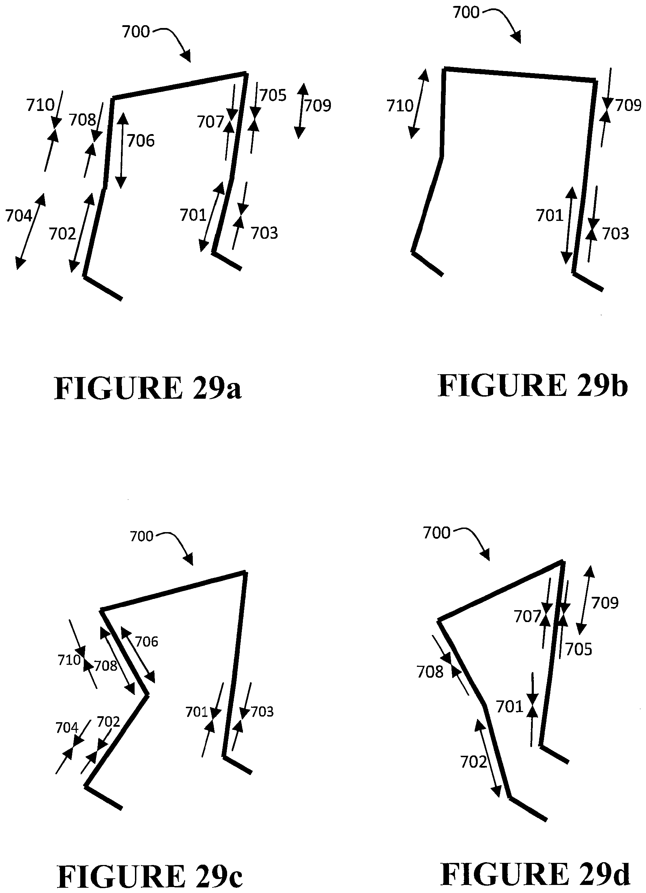

A preferred form of the control system of the WA will now be described with reference to Figures 29a-34. By way of example, the control system will be explained with reference to the preferred embodiments of the exoskeleton that were described with reference to Figures 1-28. However, it will be appreciated that the control system configuration, methods and techniques could be adapted and applied to other mobility aid and exoskeleton systems that have similar control functionality and fitting requirements.

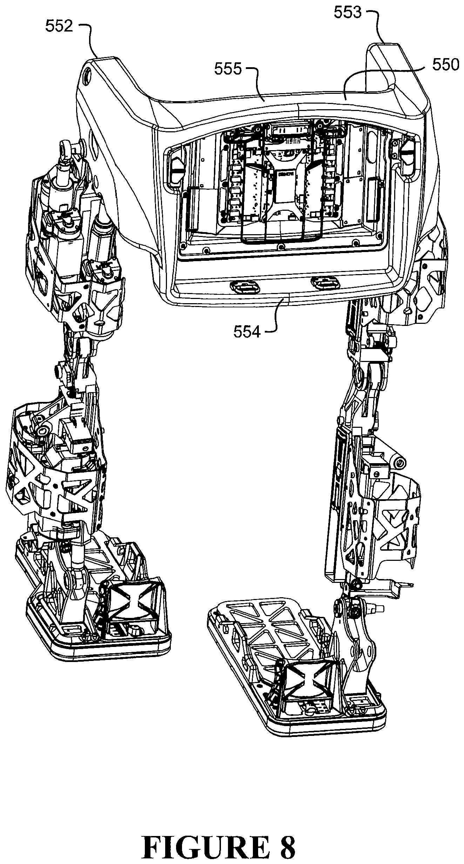

It will be appreciated that the control system may be implemented on any suitable hardware system, platform or architecture. The hardware system is provided on-board the WA and preferably comprises at least a processor for running the control system algorithms, memory for storing control system algorithms and data, and interface circuitry for communicating with and operating other WA components, such as receiving sensor signals and operating exoskeleton actuators. It will be appreciated that the processor may be any form of programmable hardware device, whether a CPU, Digital Signal Processor, Field-Programmable Gate Array, Microcontroller, Application-Specific Integrated Circuit, or the like. As shown in figure 8, the control system may be housed within and accessible through the back of the pelvic support 550.

The control system controls the behaviour and movement of the actuators of the exoskeleton 500 based on user input via the human device interface and sensor inputs which detect WA balancing and environmental factors such as terrain change. When powered, the WA control system remains in an idle state maintaining its current position and awaiting user input via the control pad. The user input is converted to a set of command values that trigger a pre-programmed sequence of movements of the actuators via an actuator controller such as a set of motor controllers. The preferred form control system stores a series of pre-programmed sequences, each sequence being configured to effect a different movement, such as, but not exclusively, walking, sitting, and standing. Each pre-programmed sequence may be adjusted by variables determined during calibration to alter the pre-programmed sequence based on the user.

The pre-programmed sequence is driven to an event or sequence of events/instructions which is determined as being completed by the physical positions of the actuators and or appropriate signals from the environmental sensors. By having pre-programmed time and position sequences, computational time and power is saved.

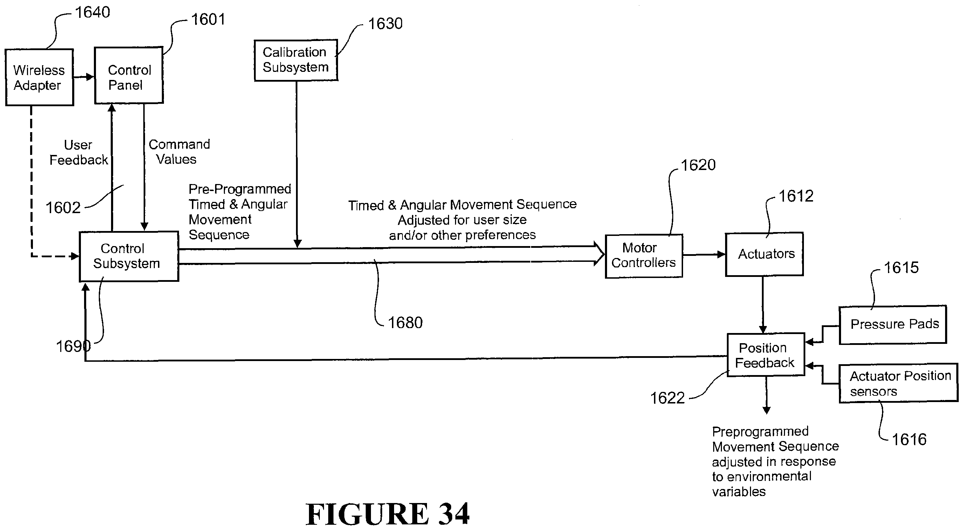

With reference to figure 34, the preferred form control system comprises a human machine interface 1601, a wireless interface 1640, a calibration sub-system 1630 and a motor control subsystem 1620. The motor control subsystem (i.e. the actuator controller) is connected to the actuators 1612. Various sensors 1610, 1611, including sensors in the actuators 1612 provide feedback, such as the position of the actuators.

User input via the control panel 1601 and/or received via the wireless interface 1640 is converted into a pre-programmed command by the control system 1690. The pre-programmed commands instruct the motor controllers 1620 to move the actuators 1612.

Actuator sensors 1616 provide feedback to the control system to ensure correct movement of the actuators. The pre-programmed commands may be altered during or after a calibration stage 1630 depending on the user's size/structure (height and/or weight for example).

### 3.1 Human Machine Interface

In the preferred embodiment a control pad will be used for human machine interfacing, it contains twelve membrane keypad buttons, three LEDs, a joystick and a battery meter. Other suitable human machine interfacing controls may be used. For example a touch screen may replace the control pad. In another alternative an LCD screen may replace the LED's and battery meter and display other suitable status information related to the device.

The keypad of the preferred embodiment contains an 'ON/OFF' button which will be used to turn the WA on and off, a 'Sit' button which will be used to make the WA sit down, a 'Stand' button which will be used to make the WA stand up and an 'Emergency battery supply' which will allow the emergency batteries to supply power to the WA once the main power supply has run out. There will be a cancel button to cancel the selected function. There will be a 'raise feet' and lower feet function for use in the seated position. There will be an audible buzzer to indicate warnings and the selection of certain functions.

The keypad contain three LEDs; one of the LEDs will blink at a constant rate when there is a fault in the WA, one of the LEDs will light up when the device is being charged and one LED will light up when the emergency power supply is being used.

The battery meter will be an array of LEDs and will provide an indication of the available power in the main battery pack, ranging from all LEDs lit up meaning the battery is fully charged to no LEDs lit up meaning the battery needs charging.

As mentioned for the alternative embodiment above, the LEDs could be replaced with an LCD screen that displays the information provided by the LEDs and in a similar or alternative manner.

The joystick will be used to control the walking motion of the WA. Selection and quick release of the joystick in the forwards or backwards direction will cause the WA to static step forwards or backwards respectively, while holding the joystick forwards or backwards for a longer period of time will cause the WA to do a dynamic step forwards or backwards respectively. Pushing the joystick to the left or right will cause the WA to step to the left or right respectively. Pushing the joystick diagonally forwards or backward and simultaneously left or right will cause the WA to turn in the corresponding direction.

### 3.2 Wireless Control

In a preferred embodiment of the invention the WA comprises a wireless receiver configured to receive and process input data/signals sent from a remote computer or other remote electronic device having an associated transmitter via wireless telemetry. The input data may be indicative of one or more control signals for remotely controlling operation of the exoskeleton for example. The remote device includes, but not limited to, a desktop, laptop, notebook, tablet or mobile device. The term "mobile device" includes, but is not limited to, a wireless device, a mobile phone, a mobile communication device, a user communication device, personal digital assistant, mobile hand-held computer, a laptop computer, an electronic book reader and reading devices capable of reading electronic contents and/or other types of mobile devices typically carried by individuals and/or having some form of wireless communication capabilities (e.g., wireless, infrared, short-range radio, etc.).

The wireless receiver comprises an antenna configured to receive radiation signals of a known frequency, and a processor coupled to the antenna. The processor is configured to process the signals received by the antenna in accordance with an associated wireless protocol. It will be appreciated that any wireless telemetry methodology known in the art can be used by the WA system of the invention. For example, a 2.4GHz ISM band may be used to achieve wireless communication between the remote device and the wireless receiver/interface 1640 of the invention, and using a frequency hopping spread spectrum protocol or any other suitable frequency and protocol combination known in the art. The wireless receiver may be integrated with the control system of the WA, or alternatively may be a separate module that can be connected to an appropriate port provided on the WA. In the latter case, the control system would be configured to identify connection of the module and communicate with the module to process information received by the module.

An input interface is provided by the remote device to enable a user to input data indicative of one or more control and/command signals and to send the control and/or command signals wirelessly to the exoskeleton. Exemplary command signals that may be sent from the remote device to the wireless receiver include, but are not limited to, any combination of:
- an 'on' command for turning the WA on,
- an 'off' command for turning the WA off,
- a 'sit' command to make the WA sit down,
- a 'Stand' command to make the WA stand up,
- an 'Emergency battery supply' command to allow the emergency batteries to supply power to the WA once the main power supply has run out,
- a 'raise feet' and a 'lower feet' command to raise and lower feet accordingly when the exoskeleton is in the seated position,
- a 'static step forward', a 'static step backward', a 'static step left', and a 'static step right' command to cause the exoskeleton to take one step forward, backwards, left or right respectively,
- a dynamic step forward', a 'dynamic step backward', a 'dynamic step left', and a 'dynamic step right' command to cause the exoskeleton to take continuous steps forward, backwards, left or right respectively, and/or
- a 'turn left' and 'turn right' command to cause the exoskeleton to turn to the left and right respectively.

The above command signals are received by the wireless receiver of the WA and provided to the control system for further processing. The command signals sent to the exoskeleton from the remote device trigger a pre-programmed sequence of events associated with the command (as described in further detail in the next section).

It is envisaged that in some embodiments, the wireless reception module may be configured to receive command signals indicative of a desired relative movements of one or more specific actuators. In this case, the control system would receive these signals and send them directly to the motor controller(s) to achieve the desired movement for the associated actuator(s).

The wireless receiver may be a transceiver that is further configured to transmit signals to the remote device, such as motor, actuator and/or battery status signals.

### 3.3 Pre-programmed commands/sequences

The WA is controlled by the user through a human machine interface. As previously described the human machine interface of the preferred embodiment is a keypad. Performing an action on the keypad triggers a pre-programmed sequence of events. Alternatively the WA can be controlled wirelessly through a human machine interface of a remote device. Similarly the command signals send to the exoskeleton from the remote device trigger a pre-programmed sequence of events. These sequences are timed, angular series of motion that constantly maintain the user in a balanced state, if this balanced state is upset be external environmental forces or even by the user movement the device subsystems interrupt and update the pre-programmed sequences with input variables to adjust for the environmental factors.

The pre-programmed sequences therefore assume a flat terrain, i.e. which is not sloped in either the longitudinal or transverse directions relative to the movement direction. Each pre-programmed movement sequence is associated with a number of sequential instructions required to perform the desired movement. The sequential instructions discretely mimic to some extent the movement steps required by the human joints to perform a particular movement sequence. Every instruction is associated with a certain set of relative actuator movements that perform the desired instruction. Therefore, the control system must store for every pre-programmed sequence, the instructions associated with that sequence and the actuator movements required for every instruction.

Figures 29a-33b provides examples of pre-programmed movement sequences, the instructions associated with these sequences, and the relative actuator movements required to perform those particular instructions. In the following examples, a model 700 of the exoskeleton 500 of figures 1-44 is shown in a schematic form for clarity. The arrows shown correspond to movements of the actuators relative to the previous instruction (or movement from an upstanding controlled position in the case of the first instruction).

As discussed for the exoskeleton 500 of figures 1-44, the joint angles of the exoskeleton are changed by varying the lengths of the actuators associated with the particular joint. Actuators 701-710 are therefore represented by arrows to show whether the actuators are lengthened or shortened during a particular instruction (which in turn varies the associated joint to perform the desired movement). Actuators 701-710 each correspond to one of actuators 19, 39, 13, 16 and 38 of exoskeleton 500 (associated with joints 17, 12 and 14) as shown in the table 1 below.

**Table 1**

| **Model 700 Actuator** | **Corresponding Exoskeleton 500 Actuator** |
|---|---|
| Actuator 701 | Main left foot actuator 19 |
| Actuator 702 | Main right foot actuator 19 |
| Actuator 703 | Secondary left foot actuator 39 |
| Actuator 704 | Secondary right foot actuator 39 |
| Actuator 705 | Left knee actuator 13 |
| Actuator 706 | Right knee actuator 13 |
| Actuator 707 | Main left hip actuator 16 |
| Actuator 708 | Main right hip actuator 16 |
| Actuator 709 | Secondary left hip actuator 38 |
| Actuator 710 | Secondary right hip actuator 38 |

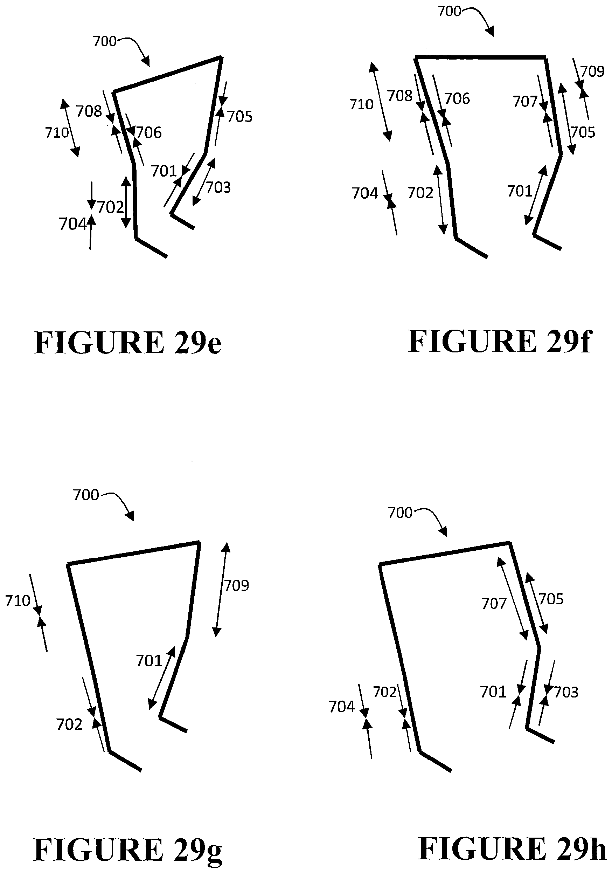

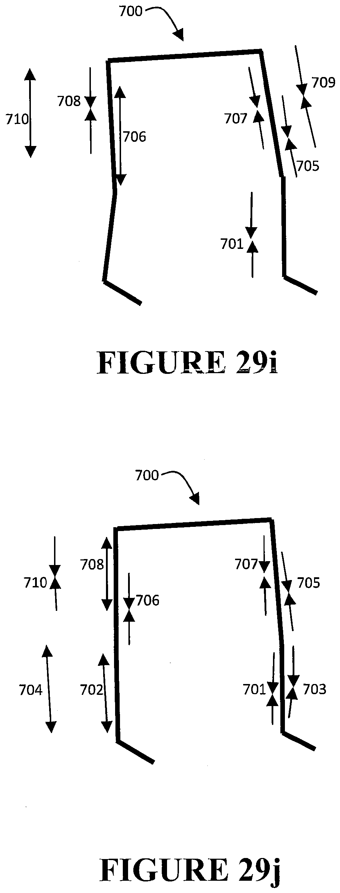

For the example movement sequences of figures 29 - 33 below, reference will be made to actuators 701 - 710 and in particular to their change in length as represented by the associated arrows of the drawings.

### Walking - Static Step

A static step movement sequence is shown in figures 29(a)-(j). A static step requires one step to be taken by each leg and results in the exoskeleton 700 standing in a controlled position (not leaning to the left or to the right) with both legs in line with (adjacent) one another. Before taking a step, the WA may check that it is in the standing position. The WA's and users combined centre of mass is firstly shifted to the side directly above one foot. The system will ensure the centre of mass is directly above the foot. The other leg is elevated and moved forward and then placed down on the ground in a position ahead of the first foot. The WA's and users combined centre of mass is next shifted to the side directly above the forward foot and then the other foot is raised and moved forward to a position in line with the first foot and is lowered to the ground in this position.

The particular example shown in figure 29 shows the right leg leading the static step. It will be appreciated that a similar programmed sequence for a leading left leg movement can also be stored by the system by simply changing the order of some of the instructions. Furthermore, the example shown is for a forward step and it will be appreciated that a backwards step could also be pre-programmed by varying the instructions accordingly as will be inherently apparent to a person skilled in the art.

The following instructions are therefore stored for the static step programmed sequence (forward step with right leg leading) of figure 29:
i) lean the exoskeleton 700 to the left (fig 29(a)),
ii) tilt the pelvis to the left (fig 29(b)),
iii) raise the right leg and move it forwards (fig 29(c)),
iv) lower the right leg down onto the ground surface (fig 29(d)) so that the right leg is ahead of the left leg,
v) transfer the weight of the exoskeleton 700 (with the user in it) to the right to position the exoskeleton 700 is in a controlled position (fig 29(e)),
vi) continue to transfer the weight to the right to position the exoskeleton 700 is in a right position (fig 29(f)),
vii) tilt the pelvis of the exoskeleton 700 to the right (fig 29(g)),
viii) raise the left leg and move it forwards (fig 29(h)),
ix) lower the left leg down onto the ground surface (fig 29(i)) so that the left leg is adjacent the right leg, and
x) transfer the weight of the exoskeleton 700 (with the user in it) to the left to position the exoskeleton 700 in a controlled position (fig 29(j)).

The system onboard memory would therefore store relative actuator movements for each of the above instructions against each movement sequence. Only those actuators that change length are shown in figures 29(a)-(j). A double ended arrow represents an increase in length/expansion of the associated actuator, and two arrows facing one another represent a shortening in length/compaction of the associated actuator. For example to effect a left lean instruction (i) for the static step movement sequence, actuators 701 - 710 need to move relative to their controlled position/standing state (i.e. the state reached after the instruction shown in fig 29(j) for example) by:
- lengthening actuators 701, 702, 704, 706 and 709,
- shortening actuators 703, 705, 707, 708 and 710.

Similarly the rest of the instructions (ii)-(x) above of the static step sequence require actuator movements (relative to the resulting lengths of the actuators from the previous instruction) as shown in figures 29(b)-(j).

By way of example only, table 2 below shows relative changes in lengths of the ten actuators 701 - 710 during the static step movement sequence of figure 29. Variables indicative of these length changes will be stored against each instruction and sent to the motor control system with each sequential instruction call when a static step movement sequence is initiated, by the user via the user interface for example.

A negative value in Table 2 indicates a shortening of an actuator relative to its length at the end of a previous instruction, and a positive value indicates a lengthening of the actuator (also relative to its length at the end of a previous instruction).

### Walking - Dynamic Step

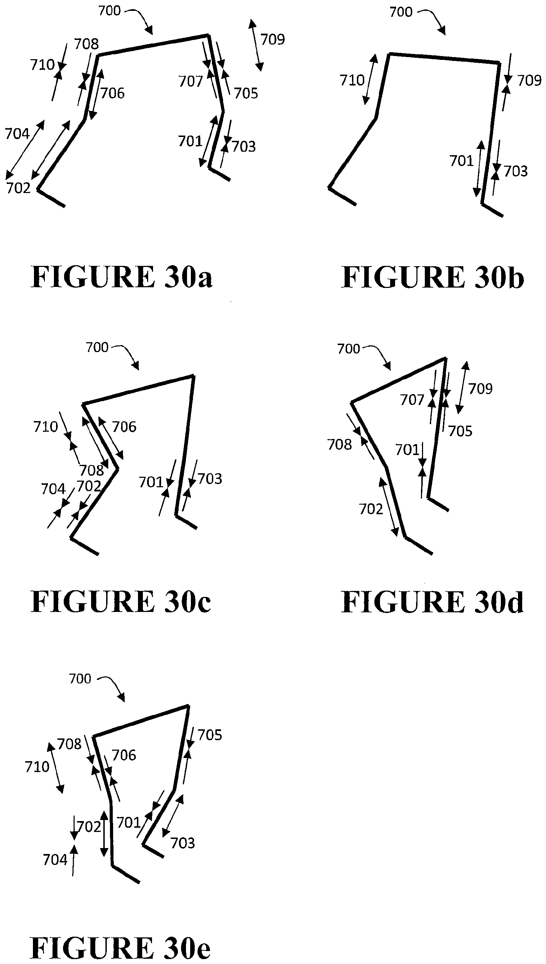

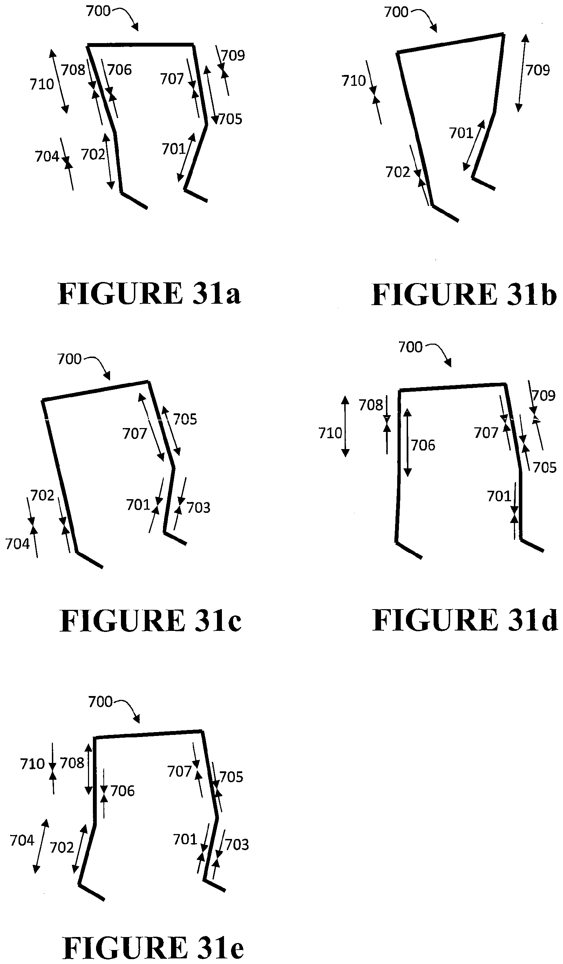

A left dynamic step movement sequence is shown in figures 30(a)-(e) and a right dynamic step movement sequence is shown in figures 31(a)-(e). The dynamic step sequence is used when a user wants to continuously walk rather than take a single step (the user may command this sequence by holding a joystick of the user interface in a forward position for example). The control system executes a dynamic step sequence by alternating between left and right dynamic steps.

Before taking a step, the WA may check that it is in the standing position. The WA's and the user's combined centre of mass is firstly shifted to the side directly above one foot. The other leg is elevated and moved forward and then placed down on the ground in a position ahead of the first foot. The WA's and the user's combined centre of mass is next shifted to the side directly above the forward foot and then the other foot is raised and moved forward to a position ahead of the first foot and is lowered to the ground in this position. This sequence is repeated while the user holds the joystick in the appropriate command position, when the joystick is released, the next footfall is made in line with (adjacent) the forward foot bringing the user to a halted standing position with both feet in line.

The left dynamic step as shown in figures 30(a)-(e) comprises the following set of sequential instructions:
(i) Transfer the weight of the exoskeleton 700 (with the user in it) to the left to position the exoskeleton 700 in a left lean position (fig 30(a)),
(ii) Tilt the pelvis of the exoskeleton 700 to the left (fig 30(b)),
(iii) raise the right leg and move it forwards (fig 30(c)),
(iv) lower the right leg down onto the ground surface (fig 30(d)) so that the right leg is ahead of the left leg,
(v) transfer the weight of the exoskeleton 700 (with the user in it) to the right to position the exoskeleton 700 is in a controlled position (fig 30(e)),

Figures 30(a)-(e) show the relative actuator movements required for effecting the above left dynamic instructions (i)-(v) respectively.

The right dynamic step as shown in figures 31(a)-(e) comprises the following set of sequential instructions:
(i) transfer the weight to the right to position the exoskeleton 700 is in a right position (fig 31(a)),
(ii) tilt the pelvis of the exoskeleton 700 to the right (fig 31(b)),
(iii) raise the left leg and move it forwards (fig 31(c)),
(iv) lower the left leg down onto the ground surface (fig 31(d)) so that the left leg is adjacent the right leg, and
(v) transfer the weight of the exoskeleton 700 (with the user in it) to the left to position the exoskeleton 700 in a controlled position (fig 31(d)).

Figures 31(a)-(e) show the relative actuator movements required for effecting the above right dynamic instructions (i)-(v) respectively.

Table 3 below shows an example of relative actuator length changes for one dynamic step sequence (a left dynamic step followed by a right dynamic step).

**Table 2**

| **Relative Actuator Movements Starting from Standing (mm)** | | | | | | | | | | | |
|---|---|---|---|---|---|---|---|---|---|---|---|
| Actuator | | 701/L Ankle | 702/R Ankle | 703/L Side Ankle | 704/R Side Ankle | 705/L Knee | 706/R Knee | 707/ L Hip | 708/ R Hip | 709/L Side Hip | 7010/R Side Hip |
| | Starting at the standing controlled position | | | | | | | | | | |
| 29(a) | Left Lean | 3 | 8 | -10 | 8 | -4 | 12 | 0 | 7 | 7 | -8 |
| 29(b) | Pelvic Tilt to Left | 2 | 4 | 0 | -2 | -2 | 22 | 0 | 16 | -10 | 8 |
| 29(c) | Right Leg Forward | 0 | 0 | 0 | 0 | 0 | -10 | 0 | 4 | 0 | 0 |
| 29(d) | Right Leg Down | 0 | -18 | 0 | 0 | 0 | -17 | 0 | -12 | 8 | -8 |
| 29(e) | Weight Transfer to the right and forward (ending in a control position) | 6 | -4 | 10 | -7 | 5 | -9 | -5 | -5 | -5 | 8 |
| 29(f) | Weight Transfer to the right and forward (ending in a right lean position) | 7 | 11 | 10 | -7 | 3 | -2 | -5 | -9 | -8 | 8 |
| 29(g) | Pelvic Tilt to Right | 3 | 0 | 0 | -3 | 0 | 0 | 5 | 0 | 11 | -8 |
| 29(h) | Left Leg Forward | -10 | 0 | 0 | 0 | 13 | 0 | 15 | 0 | 0 | 0 |
| 29(i) | Left Leg Down | -14 | 16 | 0 | 0 | -20 | 31 | -12 | 14 | -3 | 0 |
| 29(j) | Straitening | 3 | -17 | -10 | 11 | 5 | -27 | 2 | -15 | 0 | 0 |

**Table 3**

| **Relative Actuator Movements Starting from Right Control Position (mm)** | | | | | | | | | | | |
|---|---|---|---|---|---|---|---|---|---|---|---|
| Number on Movement Sequence | | 701/ L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Startinq at Right Control Position | | | | | | | | | | |
| 30(a) | Weight Transfer to the left and forward (ending in a left lean position) | 11 | 6 | -6 | 9 | -2 | 3 | -9 | -5 | 8 | -8 |
| 30(b) | Pelvic Tilt to Left | 0 | -4 | -4 | -2 | 0 | 32 | 0 | 30 | -11 | 10 |
| 30(c) | Right Leg Forward | 0 | 0 | 0 | 0 | 0 | 0 | 0 | 3 | 0 | 0 |
| 30(d) | Right Leg Down | 2 | -19 | 0 | 0 | 4 | -27 | -3 | -12 | 8 | -8 |
| 30(e) | Weight Transfer to the right and forward (ending in a control position) | 8 | -4 | 10 | -7 | 0 | -10 | 0 | -5 | -5 | 6 |
| 31(a) | Weight Transfer to the right and forward (ending in a right lean position) | 6 | 11 | 9 | -7 | 3 | -2 | -5 | -9 | -8 | 8 |
| 31(b) | Pelvic Tilt to Right | 0 | 1 | 0 | -3 | 0 | 0 | 0 | 0 | 11 | -11 |
| 31(c) | Left Leg Forward | -7 | -2 | 0 | 0 | 13 | 0 | 20 | 0 | -3 | 1 |
| 31(d) | Left Leg Down | -11 | 17 | -2 | 0 | -20 | 32 | -12 | 15 | 0 | 0 |
| 31(e) | Weight Transfer to the left and forward (ending in a left control position) | -9 | -6 | -7 | 10 | 2 | -28 | 9 | -17 | 0 | 2 |

### Sitting

Before the sit sequence is activated the WA may check that it is in a standing position. When the user activates the sit sequence seat sensors may be activated. Actuators slowly lower the WA while keeping the WA's and users combined centre of mass directly above the feet to ensure stability. The WA is then slowly lowered until the rear cover/seat sensors make contact with the surface of the seat.

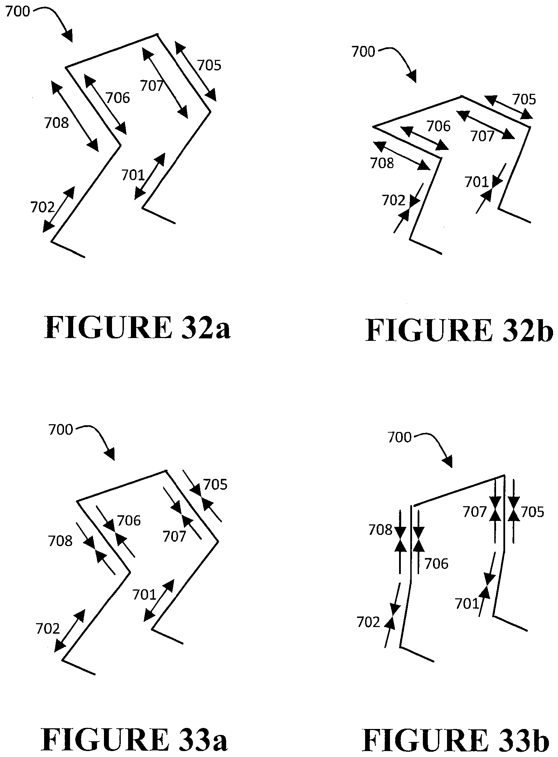

Figures 32(a) and 32(b) show the instructions associated with a sit command. These are:
(i) Lowering of the centre of mass forward (fig 32(a)), and
(ii) Shifting the centre of mass on the seat (ending in the sitting position of fig 32(b)).

Table 4 below shows the relative actuator movements (starting from a standing position) required for carrying out the sit sequence defined by instruction (i) and (ii) above.

### Standing

Before the stand sequence is activated the WA may check that it is in a seated position. When the user activates the stand sequence the seat sensors may be activated. Actuators will be used to raise the user's thighs until the rear cover sensors are no longer in contact with the surface of the seat. Actuators will then be used to shift the WA's and the user's combined centre of mass directly above the user's feet. The WA will then straighten out into a standing position while keeping the WA's and the user's combined centre of mass directly above the users feet at all times to ensure the WA is stable.

Figures 33(a) and 33(b) show the instructions associated with a stand command. These are:
(iii) Shifting the centre of mass off the seat (fig 33(a)), and
(iv) Raising the centre of mass forward (ending in the standing position of fig 33(b)).

Table 5 below shows the relative actuator movements (starting from a sitting position) required for carrying out the sit sequence defined by instruction (i) and (ii) above.

**Table 4**

| **Relative Actuator Movements Starting from Standing (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Standing Position | | | | | | | | | | | | |
| 32(a) | Lowering the Centre of Mass Forward | 6 | 6 | 0 | 0 | 7 | 7 | 6 | | 6 | 0 | 0 |
| 32(b) | Shifting the Centre of Mass on to the Seat (ending in the sitting position) | 12 | 12 | 0 | 0 | 86 | 86 | 75 | | 75 | 0 | 0 |

**Table 5**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 0 | 0 | 0 | 0 | -5 | -5 | -4 | | -4 | 0 | 0 |
| 33(b) | Raising the Centre of Mass Forward ( ending in the standing position) | -19 | -19 | 0 | 0 | -88 | -88 | -77 | | -77 | 0 | 0 |

Tables 2-5 above show examples of relative actuator lengths required for carrying out the specific instructions of the abovementioned movement sequences. Data such as values/variables indicative of these lengths will be stored against each associated instruction for each of the movement sequences to pre-program the control system of the WA. Upon calling a particular movement sequence, the values/variables associated with the first instruction of the sequence will be sent to the motor control system which will perform the required instruction by varying the length of actuators 701 - 710 accordingly. Upon completion of the first instruction, the variables/values associated with actuator lengths for the second instruction are sent to the motor control system which will again perform the required instruction accordingly. This process is repeated for all the instructions in the sequence. On top of the values/variable associated with the instruction, the WA stores time data indicative of the time allocated to each instruction before the next one issues.

It will be apparent that the actuator lengths provided in the tables above are only exemplary and can be varied depending on the particular dimensions and application of the WA. Furthermore, it will be appreciated that the concept of pre-programmed sequences could be applied on a number of other movement sequences such as shuffle and step-up/step-down (for stairs) and such other sequences are not intended to be excluded from the scope of this invention. Instructions and associated actuator movements for discretely mimicking the natural steps of the human body for these other sequences can be determined offline and programmed into the WA to increase the versatility of the exoskeleton.

### 3.4 Calibration of pre-programmed sequences

The user's anatomy can affect the operation of the WA. The size, including the height and/or weight of the user for example or any other combination of anatomical structure or dimensions, can affect the overall balance of the exoskeleton during motion. Changes in size affect the user's location of centre of mass. The location of a user's centre of mass can have implications on the dynamics of the exoskeleton system. For instance, a user with a relatively high centre of mass may require less of a side lean (than a user with a relatively low centre of mass) during a step forward to maintain balance, or a user that is tall may require a wider standing stance than a shorter user.

Furthermore, different users may have different preferences or different abilities when it comes to movement. For example, some users may prefer or may have less of a need to receive hip tilt assistance during a step.

In a preferred embodiment of the invention, the control system of the WA comprises a calibration sub-system 1630 that provides the capability of calibrating appropriate pre-programmed sequences in accordance with user calibration information. The user calibration information predominantly relates to the user's anatomy or anatomical structure and/or one or more user preferences or level of abilities.

In the preferred embodiment, the information relating to the user's anatomical structure includes the user's size. The user's size is preferably represented by at least one anatomical dimension, for example a height or overall leg length of the user, and a weight of the user. The size may be represented by any combination of one or more of: leg length, weight and/or other anatomical or limb dimensions such as height.

The information relating to the user's preference or ability includes the user's gait preference or ability, such as whether a user prefers to utilise the exoskeleton with or without a significant hip tilt - user's having less control in their trunk region may require a higher degree of hip tilt assistance than those having more control in this region.

The WA is configured to calibrate pre-programmed sequences in accordance with the user calibration information. In particular the WA is configured to calibrate the movement maps of one or more pre-programmed sequences depending on the user's size and/or one or more gait preferences to ensure certain movements will not result in an uncomfortable or unbalanced system. During calibration, the system is configured to receive input data relating to or indicative of the user's anatomical structure and preferably the size of the user and/or input data indicative of other user gait preferences. Input data received during calibration is processed to determine the appropriate movement map to be used for each movement sequence that is affected by the calibration information provided by the user. This involves the determination of relative movement values for one or more relative actuators associated with one or more instructions of the one or more movement sequences that may be affected by the user's size, anatomical structure or gait preference.

For example, the set of instructions of the static step programmed sequence (forward step with right leg leading) of figure 29 are:
i) lean the exoskeleton 700 to the left (fig 29(a)),
ii) tilt the pelvis to the left (fig 29(b)),
iii) raise the right leg and move it forwards (fig 29(c)),
iv) lower the right leg down onto the ground surface (fig 29(d)) so that the right leg is ahead of the left leg,
v) transfer the weight of the exoskeleton 700 (with the user in it) to the right to position the exoskeleton 700 is in a controlled position (fig 29(e)),
vi) continue to transfer the weight to the right to position the exoskeleton 700 is in a right position (fig 29(f)),
vii) tilt the pelvis of the exoskeleton 700 to the right (fig 29(g)),
viii) raise the left leg and move it forwards (fig 29(h)),
ix) lower the left leg down onto the ground surface (fig 29(i)) so that the left leg is adjacent the right leg, and
x) transfer the weight of the exoskeleton 700 (with the user in it) to the left to position the exoskeleton 700 in a controlled position (fig 29(j)).

The balance of the exoskeleton during execution of each of the above instructions of the movement sequence is affected by the user's size. Hence each instruction requires a relative actuator movement value for one or more of the actuators associated with that instruction depending on the size of the user to maintain an appropriately balanced system.

Similarly, to achieve a comfortable WA, system steps ii) and vii) should be executed based on the degree of hip tilt desired/required by the user.

In some embodiments, some instructions of some movement sequences may not be altered or affected by the size of the user or the user (gait) preference and hence the associated movement maps will be unaffected by the calibration stage.

In the preferred embodiment, the dynamic and static step movement sequences as well as the standing movement map are affected by the size of the user and/or the gait preference of the user and hence require a different movement map depending on the user's input calibration information.

In the preferred embodiment, for movement sequences that are affected by the size of the user and/or movement sequences that are affected by whether the user prefers a hip tilt during a step or not, the relative actuator movement values required to maintain a balanced or comfortable system during the associated set of instructions are determined offline. These are done based on two or more predetermined sizes or size ranges and/or based on two degrees of hip tilt. The movement map determined for a particular movement sequence and for a particular size and/or tilt preference is then stored in memory associated with the WA for application during operation of the WA. Alternatively, an algorithm for determining the appropriate relative actuator movement values is stored in memory associated with the WA and these values are determined for the associated movement sequences upon reception of size information and/or tilt preference information by the user during calibration. The values are then stored in memory for the appropriate movement maps.

During calibration, the control system receives information relating to the user's size and/or tilt preference and based on this information selects, during operation of the WA, the particular movement map to execute for the selected movement sequence.

In the preferred embodiment, during calibration the user's size is selected from a range of sizes pre-stored in the system. The pre-stored sizes preferably include the leg length and weight of the user. Also, during calibration the user's tilt preference is selectable from two degrees, with hip tilt or without hip tilt. For example, table 6 shows a system with a set of 12 pre-stored calibration settings, based on a combination of user's overall leg length (3 ranges), weight (2 ranges) and hip tilt preference (2 degrees). A user of the system would select the size that is the nearest to the user's actual size from the range provided and the desired degree of hip tilt. The system would then automatically determine the associated movement map to use for the movement sequences affected by these attributes. It will be appreciated that any number of pre-stored sizes, tilt preferences or other anatomical structure or user preference information may be provided based on the desired resolution, memory capacity or other design consideration.

**Table 6: Pre-stored size information**

| | OVERALL LEG LENGTH | | |
|---|---|---|---|
| | 745 - 809 MM | 810- 874 MM | 875- 940 MM |
| (40-75 KG) / WITHOUT HIP TILT | A1 | B1 | C1 |
| (40-75 KG) / WITH HIP TILT | A2 | B2 | C2 |
| (76-100 KG) / WITHOUT HIP TILT | A3 | B3 | C3 |
| (76-100 KG) / WITH HIP TILT | A4 | B4 | C4 |

The movement map for some of the movement sequences may vary based on the various calibration settings (A1-C4). Tables 7-18 show the movement maps for the dynamic step sequence for the different settings (A1-C4) to maintain a balanced/comfortable system during execution of a step sequence. Tables 19-24 show the movement maps for a standing instruction for the different calibration settings determined to maintain a balanced/comfortable system during execution of the instruction.

**Table 7: A1**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 11 | 6 | -6 | 9 | -2 | 3 | -9 | -5 | 8 | -8 |
| 30(b) | Pelvic Tilt to Left | 0 | -4 | -4 | -2 | 0 | 32 | 0 | 30 | -11 | 10 |
| 30(c) | Right Leg Forward | 0 | 0 | 0 | 0 | 0 | 0 | 0 | 3 | 0 | 0 |
| 30(d) | Right Lea Down | 2 | -19 | 0 | 0 | 4 | -27 | -3 | -12 | 8 | -8 |
| 30(e) | Weight Transfer to the right and forward (ending in a control position) | 8 | -4 | 10 | -7 | 0 | -10 | 0 | -5 | -5 | 6 |
| 31(a) | Weight Transfer to the right and forward (ending in a right lean position) | 6 | 11 | 9 | -7 | 3 | -2 | -5 | -9 | -8 | 8 |
| 31(b) | Pelvic Tilt to Right | 0 | 1 | 0 | -3 | 0 | 0 | 0 | 0 | 11 | -11 |
| 31(c) | Left Leg Forward | -7 | -2 | 0 | 0 | 13 | 0 | 20 | 0 | -3 | 1 |
| 31(d) | Left Leg Down | -11 | 17 | -2 | 0 | -20 | 32 | -12 | 15 | 0 | 0 |
| 31(e) | Weight Transfer to the left and forward (ending in a left control position) | -9 | -6 | -7 | 10 | 2 | -28 | 9 | -17 | 0 | 2 |

**Table 8: B1**

| **Relative Actuator Movements Starting from Right Control Position (mm)** | | | | | | | | | | | | |
|---|---|---|---|---|---|---|---|---|---|---|---|---|
| Number on Movement Sequence | | 701/L Ankle | | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | | |
| 30(a) | Weight Transfer to the left and forward (ending in a left lean position) | 9 | 6 | | -5.5 | 9 | -1.5 | 3.5 | -9 | -5 | 7 | -9 |
| 30(b) | Pelvic Tilt to Left | -2 | -4 | | -3.5 | -2 | 0.5 | 32.5 | 0 | 30 | -12 | 9 |
| 30(c) | Right Leg Forward | -2 | 0 | | 0.5 | 0 | 0.5 | 0.5 | 0 | 3 | -1 | -1 |
| 30(d) | Right Leg Down | 0 | -19 | | 0.5 | 0 | 4.5 | -26.5 | -3 | -12 | 7 | -9 |
| 30(e) | Weight Transfer to the right and forward (ending in a control position) | 7 | -5 | | 10 | -7 | 0.5 | -9.5 | 0 | -5 | -6 | 5 |
| 31(a) | Weight Transfer to the right and forward (ending in a right lean position) | 12 | 20 | | 18 | -12.5 | 6.5 | -3.5 | -10 | -18 | -17 | 15 |
| 31(b) | Pelvic Tilt to Right | -4 | -1 | | -2 | -6.5 | 32.5 | 0.5 | 30 | 0 | 20 | -23 |
| 31(c) | Left Leg Forward | -7 | -4 | | 0 | 0.5 | 13.5 | 0.5 | 23 | 0 | -4 | 0 |
| 31(d) | Left Leg Down | -30 | 17 | | -2 | 0.5 | -46.5 | 36.5 | -24 | 12 | -9 | 7 |
| 31(e) | Weight Transfer to the left and forward (ending in a left control position) | -14 | 1 | | -14 | 20 | -7.5 | -27.5 | 4 | -17 | 5 | -4 |

**Table 9: C1**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 8 | 6 | -5 | 9 | -1 | 4 | -9 | -5 | 6 | -10 |
| 30(b) | Pelvic Tilt to Left | -3 | -4 | -3 | -2 | 1 | 33 | 0 | 30 | -13 | 8 |
| 30(c) | Right Leg Forward | -3 | 0 | 1 | 0 | 1 | 1 | 0 | 3 | -2 | -2 |
| 30(d) | Right Leg Down | -1 | -19 | 1 | 0 | 5 | -26 | -3 | -12 | 6 | -10 |
| 30(e) | Weight Transfer to the right and forward (ending in a control position) | 6.5 | -6 | 10 | -7 | 1 | -9 | 0 | -5 | -7 | 4 |
| 31(a) | Weight Transfer to the right and forward (ending in a right lean position) | 12 | 19 | 18 | -12 | 7 | -3 | -10 | -18 | -18 | 14 |
| 31(b) | Pelvic Tilt to Right | -4 | -2 | -2 | -6 | 33 | 1 | 30 | 0 | 19 | -24 |
| 31(c) | Left Leg Forward | -7 | -5 | 0 | 1 | 14 | 1 | 23 | 0 | -5 | -1 |
| 31(d) | Left Leg Down | -30 | 16 | -2 | 1 | -46 | 37 | -24 | 12 | -10 | 6 |
| 31(e) | Weight Transfer to the left and forward (ending in a left control position) | -15 | 0.5 | -14 | 20 | -7 | -27 | 4 | -17 | 4 | -5 |

**Table 10: A2**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 11 | 6 | -6 | 9 | -2 | 3 | -14 | -10 | 8 | -8 |
| 30(b) | Pelvic Tilt to Left | 0 | -4 | -4 | -2 | 0 | 32 | -5 | 25 | -11 | 10 |
| 30(c) | Right Leg Forward | 0 | 0 | 0 | 0 | 0 | 0 | -5 | -2 | 0 | 0 |
| 30(d) | Right Leg Down | 2 | -19 | 0 | 0 | 4 | -27 | -8 | -17 | 8 | -8 |
| 30(e) | Weight Transfer to the right and forward (ending in a control position) | 8 | -4 | 10 | -7 | 0 | -10 | -5 | -10 | -5 | 6 |
| 31(a) | Weight Transfer to the right and forward (ending in a right lean position) | 12 | 22 | 18 | -13 | 6 | -4 | -15 | -23 | -16 | 16 |
| 31(b) | Pelvic Tilt to Right | -4 | 1 | -2 | -7 | 32 | 0 | 25 | -5 | 21 | -22 |
| 31(c) | Left Leg Forward | -7 | -2 | 0 | 0 | 13 | 0 | 18 | -5 | -3 | 1 |
| 31(d) | Left Leg Down | -30 | 19 | -2 | 0 | -47 | 36 | -29 | 7 | -8 | 8 |
| 31(e) | Weight Transfer to the left and forward (ending in a left control position) | -13 | 2 | -14 | 20 | -8 | -28 | -1 | -22 | 6 | -3 |

**Table 11: B2**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 9 | 6 | -5.5 | 9 | -1.5 | 3.5 | -14 | -10 | 7 | -9 |
| 30(b) | Pelvic Tilt to Left | -2 | -4 | -3.5 | -2 | 0.5 | 32.5 | -5 | 25 | -12 | 9 |
| 30(c) | Right Leg Forward | -2 | 0 | 0.5 | 0 | 0.5 | 0.5 | -5 | -2 | -1 | -1 |
| 30(d) | Right Leg Down | 0 | -19 | 0.5 | 0 | 4.5 | -26.5 | -8 | -17 | 7 | -9 |
| 30(e) | Weight Transfer to the right and forward (ending in a control position) | 7 | -5 | 10 | -7 | 0.5 | -9.5 | -5 | -10 | -6 | 5 |
| 31(a) | Weight Transfer to the right and forward (ending in a right lean position) | 12 | 20 | 18 | -12.5 | 6.5 | -3.5 | -15 | -23 | -17 | 15 |
| 31(b) | Pelvic Tilt to Right | -4 | -1 | -2 | -6.5 | 32.5 | 0.5 | 25 | -5 | 20 | -23 |
| 31(c) | Left Leg Forward | -7 | -4 | 0 | 0.5 | 13.5 | 0.5 | 18 | -5 | -4 | 0 |
| 31(d) | Left Leg Down | -30 | 17 | -2 | 0.5 | -46.5 | 36.5 | -29 | 7 | -9 | 7 |
| 31(e) | Weight Transfer to the left and forward (ending in a left control position) | -14 | 1 | -14 | 20 | -7.5 | -27.5 | -1 | -22 | 5 | -4 |

**Table 12: C2**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 8 | 6 | -5 | 9 | -1 | 4 | -14 | -10 | 6 | -10 |
| 30(b) | Pelvic Tilt to Left | -3 | -4 | -3 | -2 | 1 | 33 | -5 | 25 | -13 | 8 |
| 30(c) | Right Leg Forward | -3 | 0 | 1 | 0 | 1 | 1 | -5 | -2 | -2 | -2 |
| 30(d) | Right Leg Down | -1 | -19 | 1 | 0 | 5 | -26 | -8 | -17 | 6 | -10 |
| 30(e) | Weight Transfer to the right and forward (ending in a control position) | 6.5 | -6 | 10 | -7 | 1 | -9 | -5 | -10 | -7 | 4 |
| 31(a) | Weight Transfer to the right and forward (ending in a right lean position) | 12 | 19 | 18 | -12 | 7 | -3 | -15 | -23 | -18 | 14 |
| 31(b) | Pelvic Tilt to Right | -4 | -2 | -2 | -6 | 33 | 1 | 25 | -5 | 19 | -24 |
| 31(c) | Left Leg Forward | -7 | -5 | 0 | 1 | 14 | 1 | 18 | -5 | -5 | -1 |
| 31(d) | Left Leg Down | -30 | 16 | -2 | 1 | -46 | 37 | -29 | 7 | -10 | 6 |
| 31(e) | Weight Transfer to the left and forward (ending in a left control position) | -15 | 0.5 | -14 | 20 | -7 | -27 | -1 | -22 | 4 | -5 |

**Table 13: A3**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 11 | 6 | -6 | 9 | -2 | 3 | -9 | -5 | 7 | -9.5 |
| 30(b) | Pelvic Tilt to Left | 0 | -4 | -4 | -2 | 0 | 32 | 0 | 30 | -12 | 8.5 |
| 30(c) | Right Leg Forward | 0 | 0 | 0 | 0 | 0 | 0 | 0 | 3 | -1 | -1.5 |
| 30(d) | Right Lea Down | 2 | -19 | 0 | 0 | 4 | -27 | -3 | -12 | 7 | -9.5 |
| 30(e) | Weight Transfer to the right and forward (ending in a control position) | 8 | -4 | 10 | -7 | 0 | -10 | 0 | -5 | -6 | 4.5 |
| 31(a) | Weight Transfer to the right and forward (ending in a right lean position) | 12 | 22 | 18 | -13 | 6 | -4 | -10 | -18 | -17.5 | 15 |
| 31(b) | Pelvic Tilt to Right | -4 | 1 | -2 | -7 | 32 | 0 | 30 | 0 | 19.5 | -23 |
| 31(c) | Left Leg Forward | -7 | -2 | 0 | 0 | 13 | 0 | 23 | 0 | -4.5 | 0 |
| 31(d) | Left Leg Down | -30 | 19 | -2 | 0 | -47 | 36 | -24 | 12 | -9.5 | 7 |
| 31(e) | Weight Transfer to the left and forward (ending in a left control position) | -13 | 2 | -14 | 20 | -8 | -28 | 4 | -17 | 4.5 | -4 |

**Table 14: B3**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 9 | 6 | -5.5 | 9 | -1.5 | 3.5 | -9 | -5 | 6 | -10.5 |
| 30(b) | Pelvic Tilt to Left | -2 | -4 | -3.5 | -2 | 0.5 | 32.5 | 0 | 30 | -13 | 7.5 |
| 30(c) | Right Leg Forward | -2 | 0 | 0.5 | 0 | 0.5 | 0.5 | 0 | 3 | -2 | -2.5 |
| 30(d) | Right Lea Down | 0 | -19 | 0.5 | 0 | 4.5 | -26.5 | -3 | -12 | 6 | -10.5 |
| 30(e) | Weight Transfer to the right and forward (ending in a control position) | 7 | -5 | 10 | -7 | 0.5 | -9.5 | 0 | -5 | -7 | 3.5 |
| 31(a) | Weight Transfer to the right and forward (ending in a right lean position) | 12 | 20 | 18 | -12.5 | 6.5 | -3.5 | -10 | -18 | -18.5 | 14 |
| 31(b) | Pelvic Tilt to Right | -4 | -1 | -2 | -6.5 | 32.5 | 0.5 | 30 | 0 | 18.5 | -24 |
| 31(c) | Left Leg Forward | -7 | -4 | 0 | 0.5 | 13.5 | 0.5 | 23 | 0 | -5.5 | -1 |
| 31(d) | Left Leg Down | -30 | 17 | -2 | 0.5 | -46.5 | 36.5 | -24 | 12 | -10.5 | 6 |
| 31(e) | Weight Transfer to the left and forward (ending in a left control position) | -14 | 1 | -14 | 20 | -7.5 | -27.5 | 4 | -17 | 3.5 | -5 |

**Table 15: C3**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 8 | 6 | -5 | 9 | -1 | 4 | -9 | -5 | 5 | -11.5 |
| 30(b) | Pelvic Tilt to Left | -3 | -4 | -3 | -2 | 1 | 33 | 0 | 30 | -14 | 6.5 |
| 30(c) | Right Leg Forward | -3 | 0 | 1 | 0 | 1 | 1 | 0 | 3 | -3 | -3.5 |
| 30(d) | Right Leg Down | -1 | -19 | 1 | 0 | 5 | -26 | -3 | -12 | 5 | -11.5 |
| 30(e) | Weight Transfer to the right and forward (ending in a control position) | 6.5 | -6 | 10 | -7 | 1 | -9 | 0 | -5 | -8 | 2.5 |
| 31(a) | Weight Transfer to the right and forward (ending in a right lean position) | 12 | 19 | 18 | -12 | 7 | -3 | -10 | -18 | -19.5 | 13 |
| 31(b) | Pelvic Tilt to Right | -4 | -2 | -2 | -6 | 33 | 1 | 30 | 0 | 17.5 | -25 |
| 31(c) | Left Leg Forward | -7 | -5 | 0 | 1 | 14 | 1 | 23 | 0 | -6.5 | -2 |
| 31(d) | Left Leg Down | -30 | 16 | -2 | 1 | -46 | 37 | -24 | 12 | -11.5 | 5 |
| 31(e) | Weight Transfer to the left and forward (ending in a left control position) | -15 | 0.5 | -14 | 20 | -7 | -27 | 4 | -17 | 2.5 | -6 |

**Table 16: A4**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 11 | 6 | -6 | 9 | -2 | 3 | -14 | -10 | 7 | -9.5 |
| 30(b) | Pelvic Tilt to Left | 0 | -4 | -4 | -2 | 0 | 32 | -5 | 25 | -12 | 8.5 |
| 30(c) | Right Leg Forward | 0 | 0 | 0 | 0 | 0 | 0 | -5 | -2 | -1 | -1.5 |
| 30(d) | Right Leg Down | 2 | -19 | 0 | 0 | 4 | -27 | -8 | -17 | 7 | -9.5 |
| 30(e) | Weight Transfer to the right and forward (ending in a control position) | 8 | -4 | 10 | -7 | 0 | -10 | -5 | -10 | -6 | 4.5 |
| 31(a) | Weight Transfer to the right and forward (ending in a right lean position) | 12 | 22 | 18 | -13 | 6 | -4 | -15 | -23 | -17.5 | 15 |
| 31(b) | Pelvic Tilt to Right | -4 | 1 | -2 | -7 | 32 | 0 | 25 | -5 | 19.5 | -23 |
| 31(c) | Left Leg Forward | -7 | -2 | 0 | 0 | 13 | 0 | 18 | -5 | -4.5 | 0 |
| 31(d) | Left Leg Down | -30 | 19 | -2 | 0 | -47 | 36 | -29 | 7 | -9.5 | 7 |
| 31(e) | Weight Transfer to the left and forward (ending in a left control position) | -13 | 2 | -14 | 20 | -8 | -28 | -1 | -22 | 4.5 | -4 |

**Table 17: B4**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 9 | 6 | -5.5 | 9 | -1.5 | 3.5 | -14 | -10 | 6 | -10.5 |
| 30(b) | Pelvic Tilt to Left | -2 | -4 | -3.5 | -2 | 0.5 | 32.5 | -5 | 25 | -13 | 7.5 |
| 30(c) | Right Leg Forward | -2 | 0 | 0.5 | 0 | 0.5 | 0.5 | -5 | -2 | -2 | -2.5 |
| 30(d) | Right Leg Down | 0 | -19 | 0.5 | 0 | 4.5 | -26.5 | -8 | -17 | 6 | -10.5 |
| 30(e) | Weight Transfer to the right and forward (ending in a control position) | 7 | -5 | 10 | -7 | 0.5 | -9.5 | -5 | -10 | -7 | 3.5 |
| 31(a) | Weight Transfer to the right and forward (ending in a right lean position) | 12 | 20 | 18 | -12.5 | 6.5 | -3.5 | -15 | -23 | -18.5 | 14 |
| 31(b) | Pelvic Tilt to Right | -4 | -1 | -2 | -6.5 | 32.5 | 0.5 | 25 | -5 | 18.5 | -24 |
| 31(c) | Left Leg Forward | -7 | -4 | 0 | 0.5 | 13.5 | 0.5 | 18 | -5 | -5.5 | -1 |
| 31(d) | Left Leg Down | -30 | 17 | -2 | 0.5 | -46.5 | 36.5 | -29 | 7 | -10.5 | 6 |
| 31(e) | Weight Transfer to the left and forward (ending in a left control position) | -14 | 1 | -14 | 20 | -7.5 | -27.5 | -1 | -22 | 3.5 | -5 |

**Table 18: C4**

| **Relative Actuator Movements Starting from Right Control Position (mm)** | | | | | | | | | | | |
|---|---|---|---|---|---|---|---|---|---|---|---|
| Number on Movement Sequence | | 701/L Ankle | 702/R Ankle | 703/L Side Ankle | 704/R Side Ankle | 705/L Knee | 706/R Knee | 707/ L Hip | 708/ R Hip | 709/L Side Hip | 710/R Side Hip |
| | Starting at Right Control Position | | | | | | | | | | |
| 30(a) | Weight Transfer to the left and forward (ending in a left lean position) | 8 | 6 | -5 | 9 | -1 | 4 | -14 | -10 | 5 | -11.5 |
| 30(b) | Pelvic Tilt to Left | -3 | -4 | -3 | -2 | 1 | 33 | -5 | 25 | -14 | 6.5 |
| 30(c) | Right Leg Forward | -3 | 0 | 1 | 0 | 1 | 1 | -5 | -2 | -3 | -3.5 |
| 30(d) | Right Leg Down | -1 | -19 | 1 | 0 | 5 | -26 | -8 | -17 | 5 | -11.5 |
| 30(e) | Weight Transfer to the right and forward (ending in a control position) | 6.5 | -6 | 10 | -7 | 1 | -9 | -5 | -10 | -8 | 2.5 |
| 31(a) | Weight Transfer to the right and forward (ending in a right lean position) | 12 | 19 | 18 | -12 | 7 | -3 | -15 | -23 | -19.5 | 13 |
| 31(b) | Pelvic Tilt to Right | -4 | -2 | -2 | -6 | 33 | 1 | 25 | -5 | 17.5 | -25 |
| 31(c) | Left Leg Forward | -7 | -5 | 0 | 1 | 14 | 1 | 18 | -5 | -6.5 | -2 |
| 31(d) | Left Leg Down | -30 | 16 | -2 | 1 | -46 | 37 | -29 | 7 | -11.5 | 5 |
| 31(e) | Weight Transfer to the left and forward (ending in a left control position) | -15 | 0.5 | -14 | 20 | -7 | -27 | -1 | -22 | 2.5 | -6 |

**Table 19: A1, A3**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 5 | 5 | 3 | 3 | -2.5 | | -2.5 | -5 | -5 |

**Table 20: A2, A4**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 5 | 5 | 3 | 3 | -7.5 | | -7.5 | -5 | -5 |

**Table 21: B1, B3**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 10 | 10 | 3 | 3 | -2.5 | | -2.5 | -10 | -10 |

**Table 22: B2, B4**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 10 | 10 | 3 | 3 | -7.5 | | -7.5 | -10 | -10 |

**Table 23: C1, C3**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 15 | 15 | 3 | 3 | -2.5 | | -2.5 | -15 | -15 |

**Table 24: C2, C4**

| **Relative Actuator Movements Starting from Sitting (mm)** | | | | | | | | | | | | |
|---|---|---|---|---|---|---|---|---|---|---|---|---|
| Number on Movement Sequence | | 1/L Ankle | 2/R Ankle | 3/L Side Ankle | 4/R Side Ankle | 5/L Knee | 6/R Knee | | 7/ L Hip | 8/ R Hip | 9/L Side Hip | 10/R Side Hip |
| Starting from the Sitting Position | | | | | | | | | | | | |
| 33(a) | Shifting the Centre of Mass off the Seat | 25 | 25 | 0 | 0 | 97 | 97 | 75 | | 75 | 0 | 0 |
| 33(b) | Raising the Centre of Mass Forward ( ending in the standing position) | 2.5 | 2.5 | 15 | 15 | 3 | 3 | -7.5 | | -7.5 | -15 | -15 |

In an alternative embodiment, the WA may be configured to receive input data relating the user's actual size and/or varying degrees of a gait preference which is then used to determine appropriate movement maps. For example the WA may first determine an indicative size from the range of pre-stored sizes that is nearest to the actual size input by the user, and then determines the appropriate movement maps to execute based on the indicative size. Alternatively the system may utilise one or more pre-stored algorithms to determine the appropriate movement maps from the input calibration data relating to user's anatomical structure and/or gait preferences.

The calibration stage may be initiated automatically during power up, or by a user through the input interface, or by a user wirelessly from a remote device for example.

### 4. POWER SOURCE

The WA is powered by on-board battery packs (not shown). In the preferred embodiment the battery packs are located at the back of the hip frame. The battery system is a low voltage DC system and the battery packs are rechargeable from domestic power supply or vehicle power supplies. The battery backs are removable for quick replacement. The battery backs can be charged on board the WA or externally after removal.

The system electronics including the control system, the motor controllers, power sources and/or other electronics may be housed in and accessible through the back of the hip frame 550 as shown in figure 8.

The foregoing description of the invention includes preferred forms thereof. Modifications may be made thereto without departing from the scope of the invention as defined by the accompanying claims.

## Claims

1. An exoskeleton (500) including a length adjustable leg member (511/521) pivotally connected to a first other member at a first pivot location, with a linear actuator (571a/581a) connected between the leg member (511/521) and the first other member, such that extension or retraction of the actuator (571a/581a) causes relative pivoting of the leg member (511/521) relative to the first other member, wherein the actuator (571a/581a) connects to the leg member (511/521) at an actuator connecting location spaced along the leg member (511/521) from the first pivot location, wherein the leg member (511/521) includes a first leg part (511a/521a) and a second leg part (511b/521b) together formed and slidable relative to one another along a line of adjustment by an adjustment mechanism (800), said leg member (511/521) including the adjustment mechanism (800) which fixedly adjusts the relative position of the first leg part (511a/521a) and second leg part (511b/521b) along the line of adjustment by pulling or pushing one of the first or second leg parts relative to the other of the first or second leg parts; said leg member (511/521) including a locking mechanism which is independent of the adjustment mechanism and which secures the relative position of the first leg part (511a/521a) and the second leg part (511b/521b); and wherein the adjustment of the length of the leg member (511/521) alters the position of the first or second leg part while the other of the first or second leg part remains fixed in position relative to the first other member so as to not affect the length of the portion of the leg member (511/521) that is between the actuator connecting location and the first pivot location.

2. An exoskeleton (500) as claimed in claim 1 wherein the leg member (511/521) is pivotally connected to a second other member at a second pivot location, and a second linear actuator (572/582) connects between a second actuator connecting location on the leg member (511/521) and the second other member, and the adjustment of the length of the leg member (511/521) alters the position of the first or second leg part while the other of the first or second leg part remains fixed in position relative to the second other member so as to not affect the length of the portion of the leg member (511/521) that is between the second actuator connecting location and the second pivot location.

3. An exoskeleton (500) as claimed in claim 2 wherein the first leg part (511a) includes the first pivot location and the actuator connecting location, and the second leg part (511b) includes the second pivot location and the second actuator connecting location, the first and second leg parts (511a, 511b) being fixable in more than one relative position by the adjustment mechanism (800) to vary the separation between the first and second pivot locations.

4. An exoskeleton (500) as claimed in any one of claim 1 to claim 3 including two leg structures (510, 520), and each leg structure (510, 520) including a leg member (511/521) of adjustable length.

5. An exoskeleton (500) as claimed in any one of the preceding claims wherein the line of adjustment is a straight line.

6. An exoskeleton (500) as claimed in any one of the preceding claims wherein the adjustment mechanism (800) comprises a shaft (812) connected at one end with one of the first or second leg parts (511a, 511b) and at another end with a socket of the other first or second leg part (511a, 511b), and a mechanism that manipulates the shaft (812), by rotating the shaft to thereby to adjust the relative axial position of the shaft (812) within the socket.

7. An exoskeleton (500) as claimed in claim 6 wherein the mechanism that manipulates the shaft (812) is a worm drive (813) with a rotatable input for rotating a worm and
a worm wheel connected to the shaft (812) to rotate the shaft (812), the worm engaging the worm wheel.

8. An exoskeleton (500) as claimed in any one of the preceding claims wherein the first leg part (511a) and the second leg part (511b) include engaging rail members, wherein operation of the locking mechanism causes bending forces to be transmitted between the engaging rail members, and wherein the locking mechanism is manipulable between a first condition in which it presses the rail members together to thereby secure the relative position of the first leg part (511a/521a) and the second leg part (511b/521b) and a second condition in which the rail members are more free to slide.

9. An exoskeleton (500) as claimed in claim 8 wherein the locking mechanism is carried by the first leg part (511a) and includes a bearing surface facing the second leg part (511b), and a lever (810) operable between a first position and a second position, the first position corresponding with an slidable condition of the leg parts, and the second position corresponding with a locked condition of the leg parts, manipulation of the lever (810) from the first position to the second position urging the bearing surface against the second leg part (511b) to thereby secure the relative position of the first leg part (511a/521a) and the second leg part (511b/521b).

10. An exoskeleton (500) as claimed in claim 9 wherein the locking mechanism extends from a locking region on the first leg part (511a), and the bearing surface faces the locking region of the first leg part (511a), with a portion of the second leg part (511b) located between the bearing surface and the locking region of the first leg part (511a).

## Patentansprüche

1. Exoskelett (500), das ein längenverstellbares Beinelement (511/521) beinhaltet, das schwenkbar mit einem ersten anderen Element an einer ersten Schwenkstelle verbunden ist, wobei ein linearer Aktuator (571a/581a) zwischen dem Beinelement (511/521) und dem ersten anderen Element verbunden ist, sodass ein Ausfahren oder Zurückziehen des Aktuators (571a/581a) ein relatives Schwenken des Beinelements (511/521) relativ zu dem ersten anderen Element bewirkt, wobei der Aktuator (571a/581a) mit dem Beinelement (511/521) an einer Aktuatorverbindungsstelle verbunden ist, die entlang des Beinelements (511/521) von der ersten Schwenkstelle beabstandet ist, wobei das Beinelement (511/521) einen ersten Beinteil (511a/521a) und einen zweiten Beinteil (511b/521b) beinhaltet, die zusammen ausgebildet sind und relativ zueinander entlang einer Einstelllinie durch einen Einstellmechanismus (800) verschiebbar sind, wobei das Beinelement (511/521) den Einstellmechanismus (800) beinhaltet, der die relative Position des ersten Beinteils (511a/521a) und des zweiten Beinteils (511b/521b) entlang der Einstelllinie durch Ziehen oder Schieben eines des ersten oder des zweiten Beinteils relativ zu dem anderen des ersten oder des zweiten Beinteils fest einstellt; wobei das Beinelement (511/521) einen Verriegelungsmechanismus beinhaltet, der unabhängig von dem Einstellmechanismus ist und der die relative Position des ersten Beinteils (511a/521a) und des zweiten Beinteils (511b/521b) sichert; und wobei die Einstellung der Länge des Beinelements (511/521) die Position des ersten oder des zweiten Beinteils verändert, während das andere des ersten oder des zweiten Beinteils in seiner Position relativ zu dem ersten anderen Element fest bleibt, damit die Länge des Abschnitts des Beinelements (511/521), der sich zwischen der Aktuatorverbindungsstelle und der ersten Schwenkstelle befindet, nicht beeinflusst wird.

2. Exoskelett (500) nach Anspruch 1, wobei das Beinelement (511/521) schwenkbar mit einem zweiten anderen Element an einer zweiten Schwenkstelle verbunden ist und ein zweiter linearer Aktuator (572/582) zwischen einer zweiten Aktuatorverbindungsstelle an dem Beinelement (511/521) und dem zweiten anderen Element verbunden ist und die Einstellung der Länge des Beinelements (511/521) die Position des ersten oder des zweiten Beinteils verändert, während das andere des ersten oder des zweiten Beinteils in seiner Position relativ zu dem zweiten anderen Element fest bleibt, damit die Länge des Abschnitts des Beinelements (511/521), der sich zwischen der zweiten Aktuatorverbindungsstelle und der zweiten Schwenkstelle befindet, nicht beeinflusst wird.

3. Exoskelett (500) nach Anspruch 2, wobei der erste Beinteil (511a) die erste Schwenkstelle und die Aktuatorverbindungsstelle beinhaltet und der zweite Beinteil (511b) die zweite Schwenkstelle und die zweite Aktuatorverbindungsstelle beinhaltet, wobei der erste und der zweite Beinteil (511a, 511b) durch den Einstellmechanismus (800) in mehr als einer relativen Position feststellbar sind, um die Trennung zwischen der ersten und der zweiten Schwenkstelle zu variieren.

4. Exoskelett (500) nach einem der Ansprüche 1 bis 3, das zwei Beinstrukturen (510, 520) beinhaltet und wobei jede Beinstruktur (510, 520) ein Beinelement (511/521) mit einstellbarer Länge beinhaltet.

5. Exoskelett (500) nach einem der vorhergehenden Ansprüche, wobei die Einstelllinie eine gerade Linie ist.

6. Exoskelett (500) nach einem der vorhergehenden Ansprüche, wobei der Einstellmechanismus (800) eine Welle (812), die an einem Ende mit einem des ersten oder des zweiten Beinteils (511a, 511b) und an einem anderen Ende mit einer Buchse des anderen ersten oder zweiten Beinteils (511a, 511b) verbunden ist, und einen Mechanismus, der die Welle (812) betätigt, indem er die Welle dreht, um dadurch die relative axiale Position der Welle (812) innerhalb der Buchse einzustellen, umfasst.

7. Exoskelett (500) nach Anspruch 6, wobei der Mechanismus, der die Welle (812) betätigt, ein Schneckenantrieb (813) mit einem drehbaren Eingang zum Drehen einer Schnecke und einem mit der Welle (812) verbundenen Schneckenrad ist, um die Welle (812) zu drehen, wobei die Schnecke in das Schneckenrad eingreift.

8. Exoskelett (500) nach einem der vorhergehenden Ansprüche, wobei der erste Beinteil (511a) und der zweite Beinteil (511b) Eingriffschienenelemente beinhalten, wobei der Betrieb des Verriegelungsmechanismus bewirkt, dass Biegekräfte zwischen den Eingriffschienenelementen übertragen werden, und wobei der Verriegelungsmechanismus zwischen einem ersten Zustand, in dem er die Schienenelemente zusammendrückt, um dadurch die relative Position des ersten Beinteils (511a/521a) und des zweiten Beinteils (511b/521b) zu sichern, und einem zweiten Zustand, in dem die Schienenelemente freier gleiten können, betätigbar ist.

9. Exoskelett (500) nach Anspruch 8, wobei der Verriegelungsmechanismus von dem ersten Beinteil (511a) getragen wird und eine Lagerfläche, die dem zweiten Beinteil (511b) zugewandt ist, und einen Hebel (810), der zwischen einer ersten Position und einer zweiten Position betreibbar ist, beinhaltet, wobei die erste Position einem verschiebbaren Zustand der Beinteile entspricht und die zweite Position einem verriegelten Zustand der Beinteile entspricht, wobei eine Betätigung des Hebels (810) aus der ersten Position in die zweite Position die Lagerfläche gegen das zweite Beinteil (511b) drückt, um dadurch die relative Position des ersten Beinteils (511a/521a) und des zweiten Beinteils (511b/521b) zu sichern.

10. Exoskelett (500) nach Anspruch 9, wobei sich der Verriegelungsmechanismus von einem Verriegelungsbereich auf dem ersten Beinteil (511a) erstreckt und die Lagerfläche dem Verriegelungsbereich des ersten Beinteils (511a) zugewandt ist, wobei sich ein Abschnitt des zweiten Beinteils (511b) zwischen der Lagerfläche und dem Verriegelungsbereich des ersten Beinteils (511a) befindet.

## Revendications

1. Exosquelette (500) incluant un élément de jambe réglable en longueur (511/521) relié de manière pivotante à un premier autre élément au niveau d'un premier emplacement de pivot, avec un actionneur linéaire (571a/581a) relié entre l'élément de jambe (511/521) et le premier autre élément, de sorte que l'extension ou la rétraction de l'actionneur (571a/581a) provoque un pivotement relatif de l'élément de jambe (511/521) par rapport au premier autre élément, dans lequel l'actionneur (571a/581a) se relie à l'élément de jambe (511/521) au niveau d'un emplacement de raccord d'actionneur espacé le long de l'élément de jambe (511/521) à partir du premier emplacement de pivot, dans lequel l'élément de jambe (511/521) comporte une première partie de jambe (511a/521a) et une seconde partie de jambe (511b/521b) formées ensemble et pouvant coulisser l'une par rapport à l'autre le long d'une ligne de réglage par un mécanisme de réglage (800), ledit élément de jambe (511/521) comportant le mécanisme de réglage (800) qui règle de façon fixe la position relative de la première partie de jambe (511a/521a) et de la seconde partie de jambe (511b/521b) le long de la ligne de réglage en tirant ou en poussant l'une des première ou seconde parties de jambe par rapport à l'autre des première ou seconde parties de jambe ; ledit élément de jambe (511/521) comportant un mécanisme de verrouillage qui est indépendant du mécanisme de réglage et qui fixe la position relative de la première partie de jambe (511a/521a) et de la seconde partie de jambe (511b/521b) ; et dans lequel le réglage de la longueur de l'élément de jambe (511/521) modifie la position de la première ou de la seconde partie de jambe tandis que l'autre de la première ou de la seconde partie de jambe reste en position fixe par rapport au premier autre élément de manière à ne pas affecter la longueur de la partie de l'élément de jambe (511/521) qui se trouve entre l'emplacement de raccord d'actionneur et le premier emplacement de pivot.

2. Exosquelette (500) selon la revendication 1, dans lequel l'élément de jambe (511/521) est relié de manière pivotante à un second autre élément au niveau d'un second emplacement de pivot, et un second actionneur linéaire (572/582) se relie entre un second emplacement de raccord d'actionneur sur l'élément de jambe (511/521) et le second autre élément, et le réglage de la longueur de l'élément de jambe (511/521) modifie la position de la première ou de la seconde partie de jambe tandis que l'autre parmi la première ou la seconde la partie de jambe reste en position fixe par rapport au second autre élément de manière à ne pas affecter la longueur de la partie de l'élément de jambe (511/521) qui se trouve entre le second emplacement de raccord d'actionneur et le second emplacement de pivot.

3. Exosquelette (500) selon la revendication 2, dans lequel la première partie de jambe (511a) comporte le premier emplacement de pivot et l'emplacement de raccord d'actionneur, et la seconde partie de jambe (511b) comporte le second emplacement de pivot et le second emplacement de raccord d'actionneur, les première et seconde parties de jambe (511a, 511b) pouvant être fixées dans plus d'une position relative par le mécanisme de réglage (800) pour faire varier la séparation entre les premier et second emplacements de pivot.

4. Exosquelette (500) selon l'une quelconque des revendications 1 à 3, comportant deux structures de jambe (510, 520), et chaque structure de jambe (510, 520) comportant un élément de jambe (511/521) de longueur réglable.

5. Exosquelette (500) selon l'une quelconque des revendications précédentes, dans lequel la ligne de réglage est une ligne droite.

6. Exosquelette (500) selon l'une quelconque des revendications précédentes, dans lequel le mécanisme de réglage (800) comprend un arbre (812) relié au niveau d'une extrémité à l'une des première ou seconde parties de jambe (511a, 511b) et au niveau d'une autre extrémité à une douille de l'autre première ou seconde partie de jambe (511a, 511b), et un mécanisme qui manipule l'arbre (812), en faisant tourner l'arbre pour ainsi régler la position axiale relative de l'arbre (812) à l'intérieur de la douille.

7. Exosquelette (500) selon la revendication 6, dans lequel le mécanisme qui manipule l'arbre (812) est un entraînement à vis sans fin (813) avec une entrée rotative pour faire tourner une vis sans fin et une roue à vis sans fin reliée à l'arbre (812) pour faire tourner l'arbre (812), la vis sans fin engageant la roue à vis sans fin.

8. Exosquelette (500) selon l'une quelconque des revendications précédentes, dans lequel la première partie de jambe (511a) et la seconde partie de jambe (511b) comportent des éléments de rail d'engagement, dans lequel le fonctionnement du mécanisme de verrouillage provoque la transmission de forces de flexion entre les éléments de rail d'engagement, et dans lequel le mécanisme de verrouillage peut être manipulé entre un premier état dans laquelle il presse les éléments de rail ensemble pour ainsi fixer la position relative de la première partie de jambe (511a/521a) et de la seconde partie de jambe (511b/521b) et un second état dans lequel les éléments de rail sont plus libres de coulisser.

9. Exosquelette (500) selon la revendication 8, dans lequel le mécanisme de verrouillage est porté par la première partie de jambe (511a) et comporte une surface d'appui faisant face à la seconde partie de jambe (511b), et un levier (810) actionnable entre une première position et une seconde position, la première position correspondant à un état coulissant des parties de jambe, et la seconde position correspondant à un état verrouillé des parties de jambe, la manipulation du levier (810) de la première position à la seconde position poussant le surface d'appui contre la seconde partie de jambe (511b) pour ainsi fixer la position relative de la première partie de jambe (511a/521a) et de la seconde partie de jambe (511b/521b).

10. Exosquelette (500) selon la revendication 9, dans lequel le mécanisme de verrouillage s'étend depuis une région de verrouillage sur la première partie de jambe (511a), et la surface d'appui fait face à la région de verrouillage de la première partie de jambe (511a), une partie de la seconde partie de jambe (511b) étant située entre la surface d'appui et la région de verrouillage de la première partie de jambe (511a).
